# EUROPEAN PATENT APPLICATION

(11) **EP 4 779 291 A1**
(43) Date of publication of application: **22.07.2026**
(21) Application number: 24865240.6
(22) Date of filing: 28.08.2024
(51) Int. Cl.: G01N 15/149, G01N 15/1404, G01N 15/1409, G01N 15/1429

(54) **PARTICLE SORTING SYSTEM, ORIFICE COMPONENT, AND PLATE**

(30) Priority: 11.09.2023 JP 2023147017; 02.05.2024 JP 2024074684
(71) Applicant: Sony Group Corporation, Tokyo 108-0075 (JP)
(72) Inventor: OKAMOTO Hidetaka, Tokyo 108-0075 (JP); SAITO Yutaka, Tokyo 108-0075 (JP); MUKAI Kenta, Tokyo 108-0075 (JP); KASAI Hiroto, Tokyo 108-0075 (JP); FURUKAWA Masahide, Tokyo 108-0075 (JP); NONAKA Wataru, Tokyo 108-0075 (JP); JITSUKAWA Keiji, Tokyo 108-0075 (JP)
(74) Representative: D Young & Co LLP
(86) International application number: PCT/JP2024/030712
(87) International publication number: WO 2025/057738

(57) **Abstract**

Provided is a technology capable of accurately aligning a cuvette flow path and an orifice.

The present technology provides a particle sorting system including: a cuvette through which a liquid containing particles flows; a holding portion that holds a plate including an orifice portion through which the liquid is discharged; and a control unit that controls to change a position of the holding portion to be substantially parallel to a discharge axis, in which the cuvette and the plate can be positioned based on shapes of the cuvette and the plate. Furthermore, the present technology also provides an orifice component or the like including a base member; and an orifice portion through which a liquid containing particles flows, in which the orifice portion is formed at one end of the base member and extends in a substantially vertical direction relative to the base member.

## Description

### TECHNICAL FIELD

The present technology relates to a particle sorting system, an orifice component, and a plate. More specifically, the present technology relates to a particle sorting system, an orifice component, and a plate capable of accurately aligning a cuvette flow path and an orifice.

### BACKGROUND ART

Currently, a technology called flow cytometry is used for analysis and sorting of bio-related particles such as cells and microorganisms, and particles such as microbeads. Flow cytometry is a method of analyzing and sorting particles by pouring particles in a state of being aligned in a liquid and irradiating the particles with light to detect light emitted from each particle. A device used for the flow cytometry is called a flow cytometer (also referred to as a "cell sorter").

In the flow cytometer, generally, a vibrating element is provided in a part of a flow path through which a particle wrapped in a sheath liquid flows, and this vibrating element vibrates the part of the flow path to continuously form a liquid discharged from a discharge port of the flow path into droplets. Then, a positive (+) charge or a negative (-) charge is applied to the droplet containing the particle on the basis of the detection signal obtained by the light irradiation, or the droplet is uncharged, and the droplet is split by the deflection plate according to the charge state, and the target particle is collected in each collection container.

Here, some flow cytometers include a flow cell type device having a cuvette flow path through which a liquid containing particles flows, but in the case of the flow cell type device, it is necessary to align an orifice with respect to the cuvette flow path.

For example, Patent Document 1 discloses "a method of forming droplets from a jet of a flow cytometer including: a. a step of forming a nozzle volume; b. a step of introducing a flow of a sheath fluid into the nozzle volume; c. a step of introducing a flow of a material into the sheath fluid within the nozzle volume; d. a step of installing an oscillator bonded to the nozzle volume and arranged at a location that is not completely outside of the nozzle volume; e. a step of applying an alternating voltage to the oscillator with an amplitude of less than 100 millivolts; f. a step of causing the sheath fluid to exit the nozzle volume; and g. a step of forming at least one droplet from the sheath fluid after causing the sheath fluid to exit the nozzle volume", but in a flow cytometer that implements this method, a user himself/herself needs to fix a nozzle main body to a cuvette using an O-ring and a fixing member.

### CITATION LIST

### PATENT DOCUMENT

Patent Document 1: Japanese Patent Application Laid-Open No. H10-507524

### SUMMARY OF THE INVENTION

### PROBLEMS TO BE SOLVED BY THE INVENTION

However, it is difficult to accurately align the cuvette flow path and the orifice at a desired position, and although it is possible to form the cuvette flow path and the orifice into a shape that can be fitted and seal them using the O-ring, and it is difficult to accurately adjust the position in a flow direction of the liquid containing the particles, and the influence of component tolerance cannot be ignored. Furthermore, it is necessary for the user to manually align the cuvette flow path and the orifice, and performing accurate position adjustment every time puts a heavy burden on the user.

Therefore, a main object of the present technology is to provide a technology capable of accurately aligning a cuvette flow path and an orifice.

### SOLUTIONS TO PROBLEMS

The present technology first provides a particle sorting system including: a cuvette flow path through which a liquid containing particles flows; a holding portion that holds a plate including an orifice portion through which the liquid is discharged; and a control unit that controls to change a position of the holding portion to be substantially parallel to a discharge axis, in which the cuvette flow path and the plate can be positioned based on shapes of the cuvette flow path and the plate.

Furthermore, the present technology provides an orifice component including a base member; and an orifice portion through which a liquid containing particles flows, in which the orifice portion is formed at one end of the base member and extends in a substantially vertical direction relative to the base member.

Furthermore, the present technology also provides a plate including a base member; and an orifice portion through which a liquid containing particles flows, in which the orifice portion is formed at one end of the base member and is fittable with the orifice component extending in a substantially vertical direction relative to the base member.

### BRIEF DESCRIPTION OF DRAWINGS

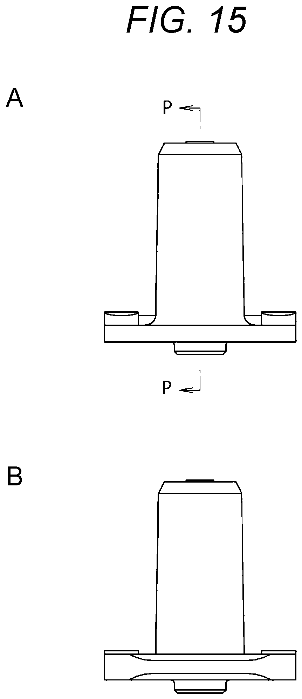

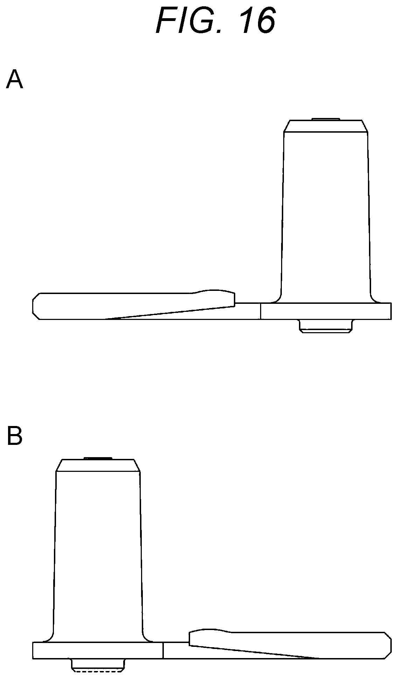

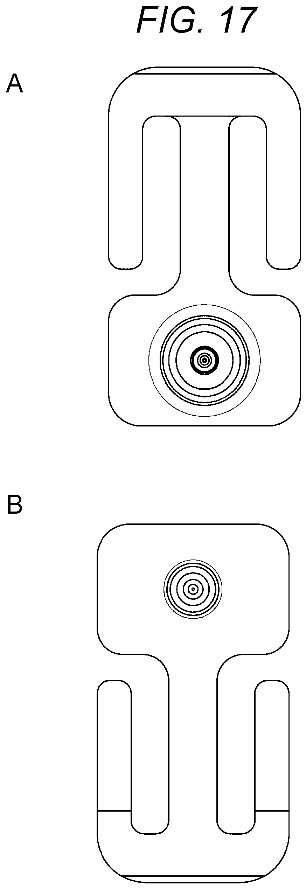

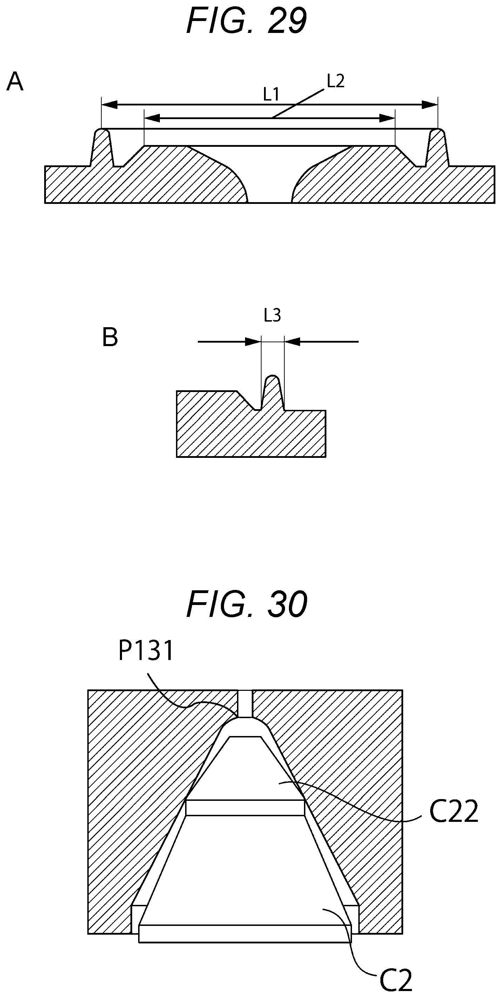

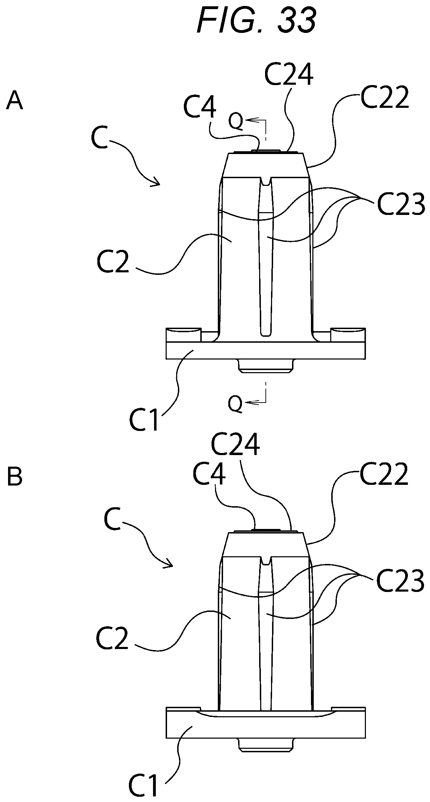

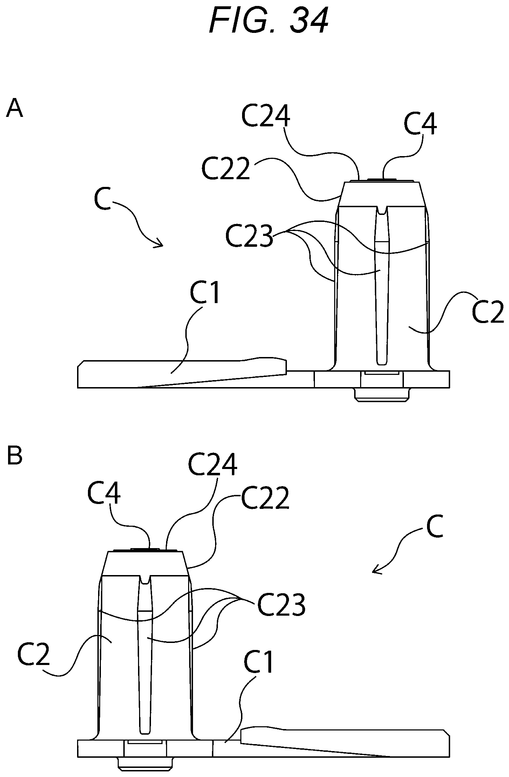

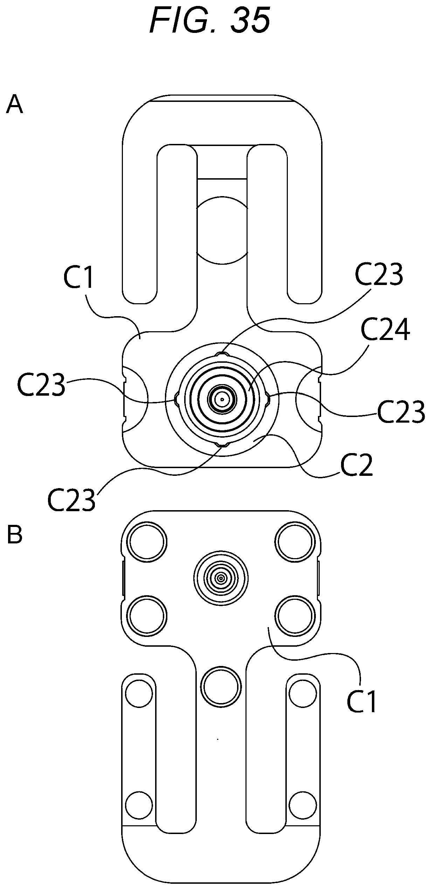

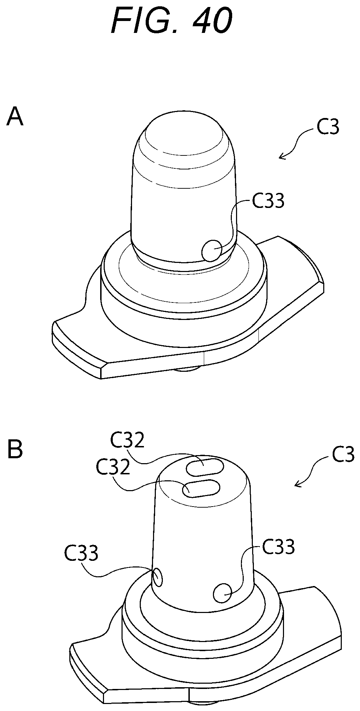

Fig. 1 is a schematic view illustrating an example of an embodiment of a particle sorting system 100 according to the present technology in the vicinity of a main flow path P13 of a cuvette flow path P and an orifice portion C2.
Fig. 2 is a schematic view illustrating an example of a first embodiment of the particle sorting system 100 according to the present technology.
Fig. 3 is a schematic view illustrating an example of an embodiment of a holding portion 11.
Fig. 4 is a view for describing positioning (coarse adjustment) between the cuvette flow path P and the orifice portion C2.
Fig. 5 is a view for describing positioning (fine adjustment) between the cuvette flow path P and the orifice portion C2.
Fig. 6 is a view for describing a state in which a stage S of the holding portion 11 and the cuvette flow path P are relatively inclined.
Fig. 7 is a view for describing a state in which a control unit 12 controls a process of sucking the orifice portion C2 toward the cuvette flow path P side in addition to two-stage positioning.
A of Fig. 8 is a view for describing a lifting/lowering height of the stage S (position of a potentiometer M2), and B of Fig. 8 is a view for describing a movable state of suction (degassing pump).
A of Fig. 9 is a plan view of a plate E including a closed orifice portion C3, and B of Fig. 9 is a partially enlarged view of A of Fig. 9.

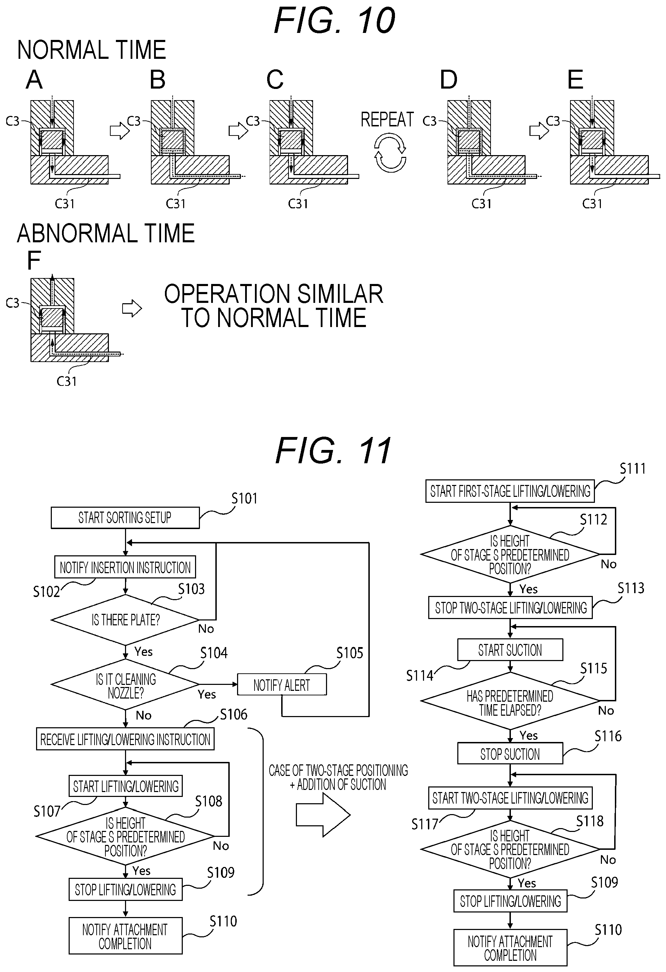

Fig. 10 is a view for describing cleaning (normal time and abnormal time) using the plate E including the closed orifice portion C3.
Fig. 11 is a flowchart for describing a flow at the time of starting sorting.

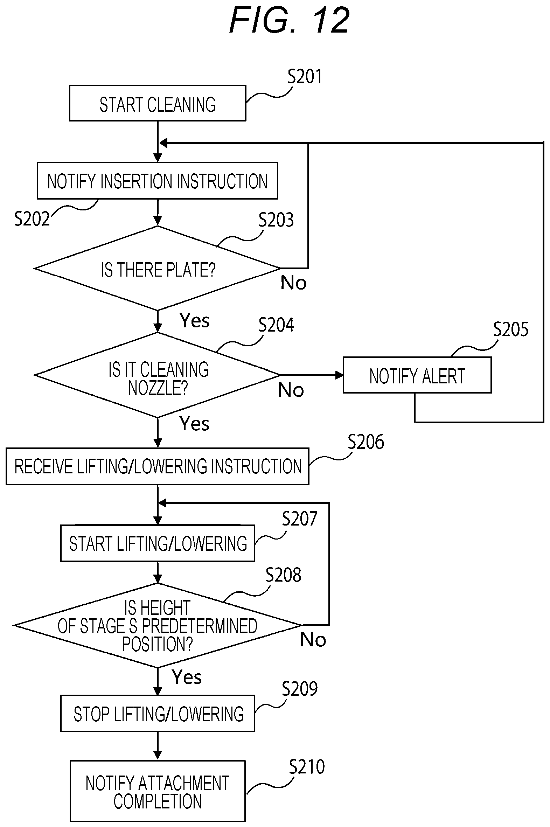

Fig. 12 is a flowchart for describing a flow at the time of cleaning.

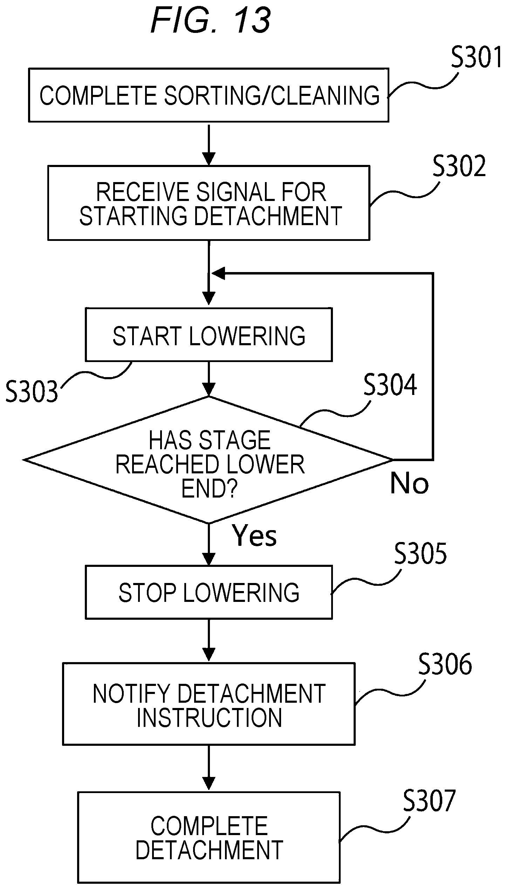

Fig. 13 is a flowchart for describing a flow when sorting or cleaning is completed.

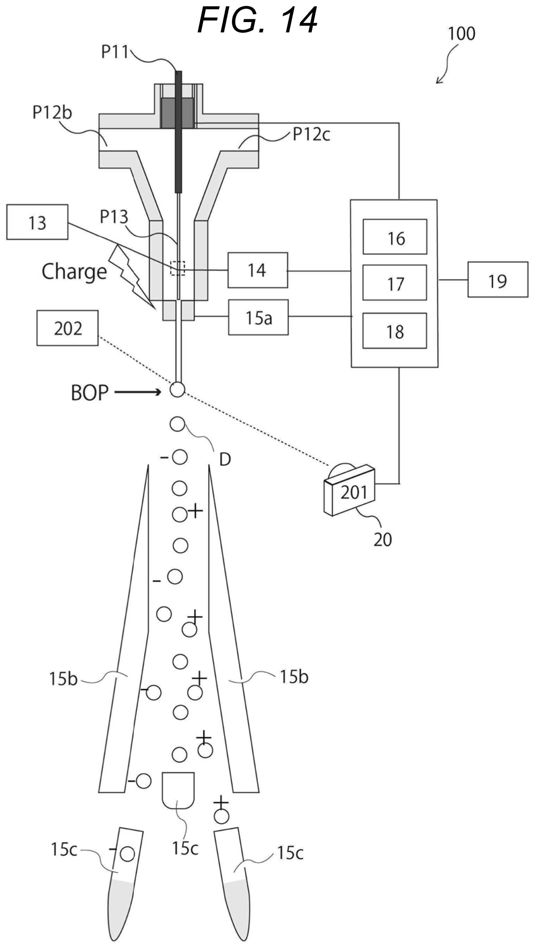

Fig. 14 is a schematic view illustrating another example of the first embodiment of the particle sorting system 100 according to the present technology.
A of Fig. 15 is a front view illustrating an example of a second embodiment of an orifice component C according to the present technology, and B of Fig. 15 is a rear view illustrating an example of the second embodiment of the orifice component C according to the present technology.
A of Fig. 16 is a left side view illustrating an example of the second embodiment of the orifice component C according to the present technology, and B of Fig. 16 is a right side view illustrating an example of the second embodiment of the orifice component C according to the present technology.
A of Fig. 17 is a plan view illustrating an example of the second embodiment of the orifice component C according to the present technology, and B of Fig. 17 is a bottom view illustrating an example of the second embodiment of the orifice component C according to the present technology.

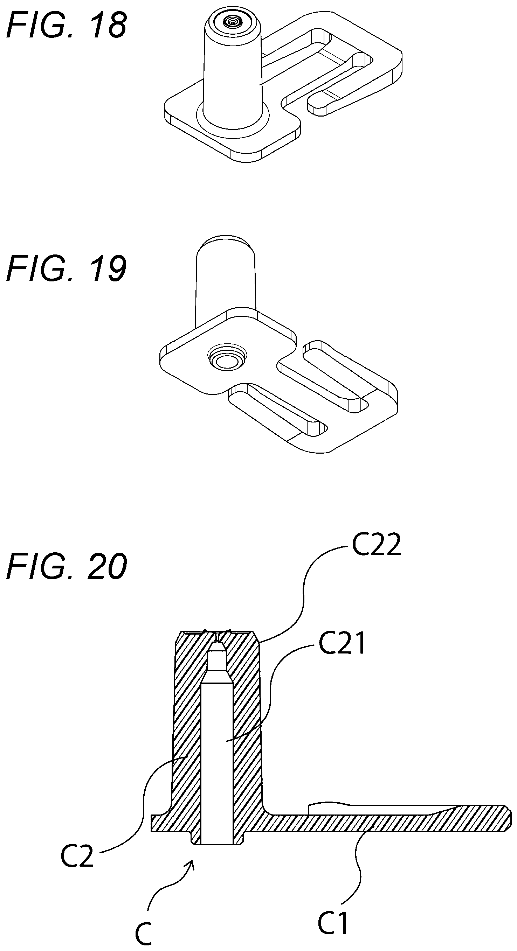

Fig. 18 is a perspective view illustrating an example of the second embodiment of the orifice component C according to the present technology.
Fig. 19 is a perspective view illustrating an example of the second embodiment of the orifice component C according to the present technology.
Fig. 20 is a cross-sectional view taken along line P-P in A of Fig. 15.

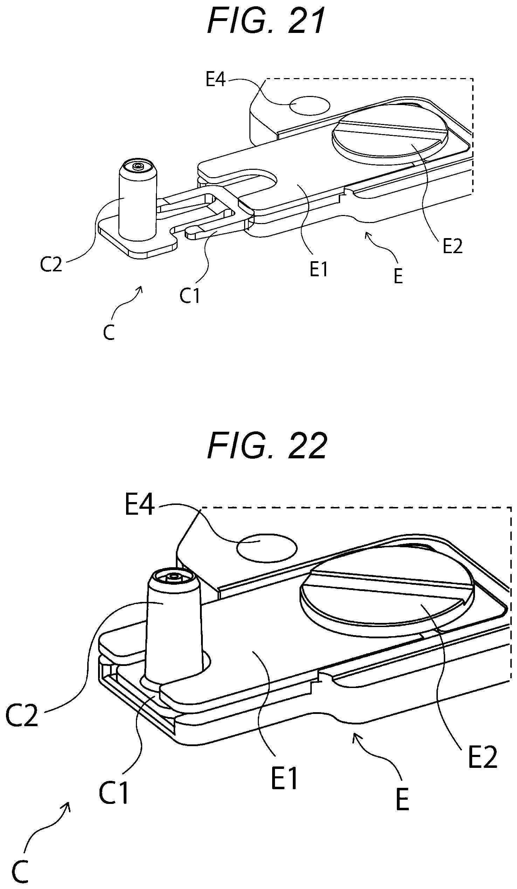

Fig. 21 is a partially enlarged view for describing a state in which the orifice component C is attached or detached from the plate E.
Fig. 22 is a partially enlarged view for describing a state in which the plate E is fitted to the orifice component C.

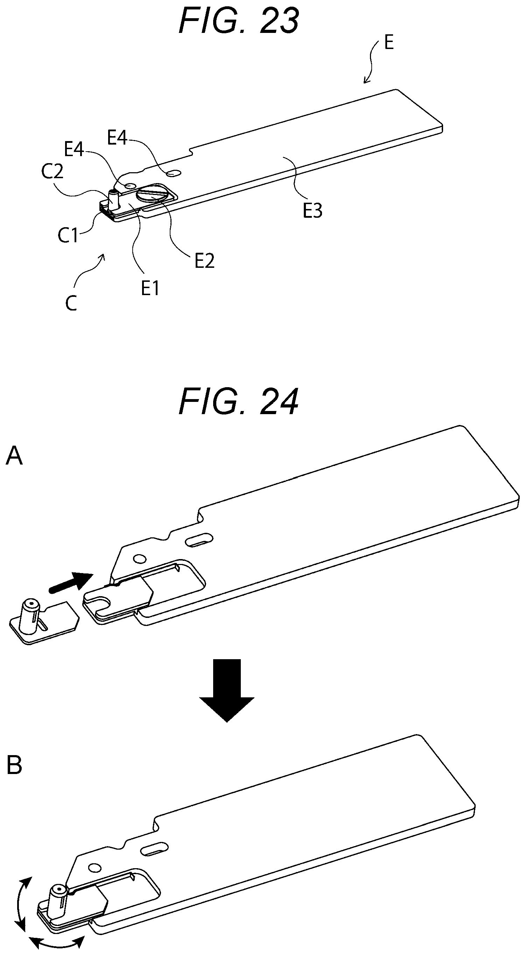

Fig. 23 is a perspective view illustrating an example of an embodiment of the plate E and the orifice component C.
Fig. 24 is a view for describing a state at the time of replacement of the orifice component C.

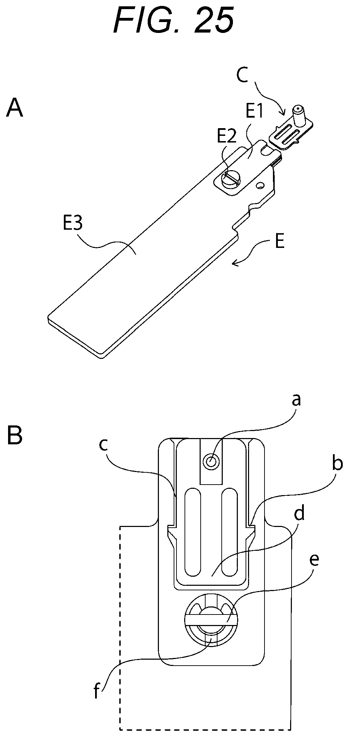

Fig. 25 is a view for describing the orifice component C and the plate E in detail.

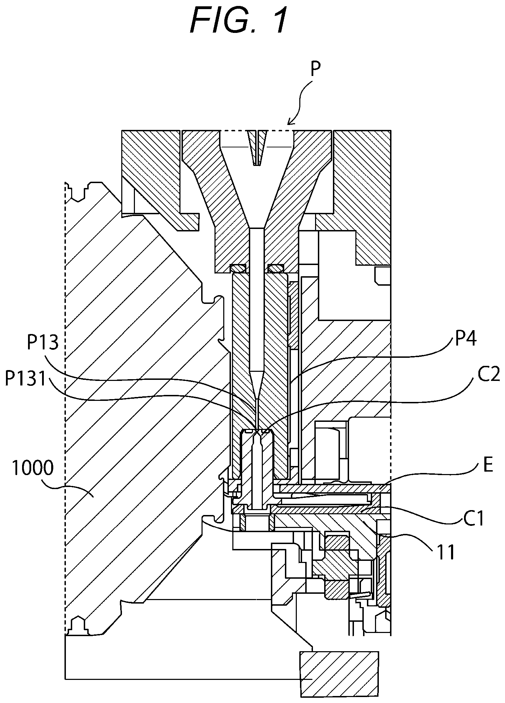

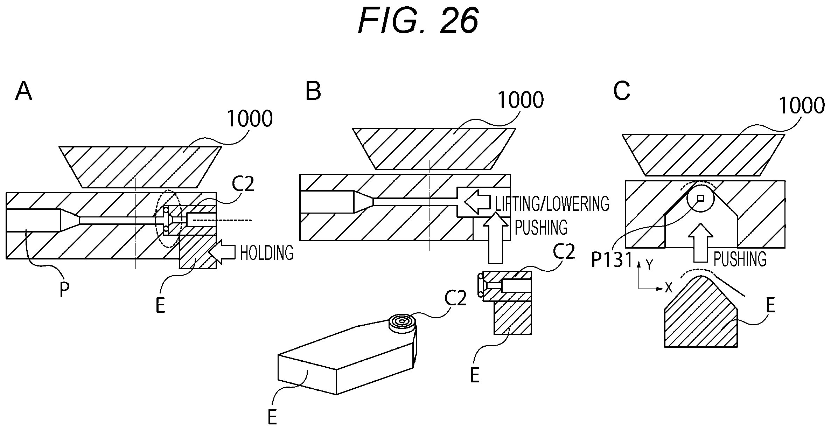

Fig. 26 is a schematic view illustrating an example of an embodiment (Another Embodiment 1) different from that in Fig. 1 in the vicinity of the cuvette flow path P and the orifice portion C2.

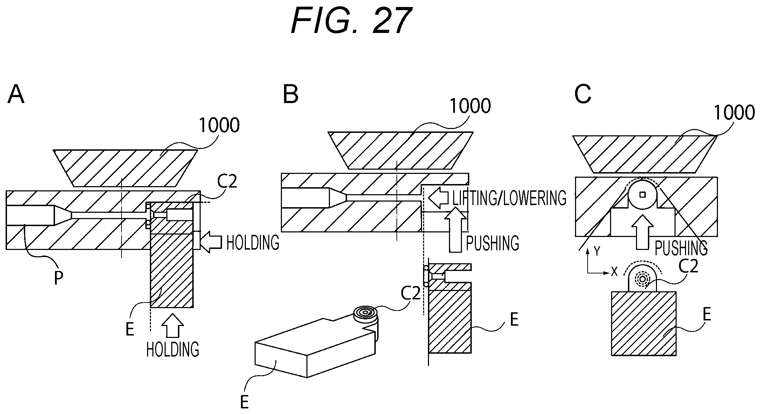

Fig. 27 is a schematic view illustrating an example of an embodiment (Another Embodiment 2) different from that in Fig. 1 in the vicinity of the cuvette flow path P and the orifice portion C2.

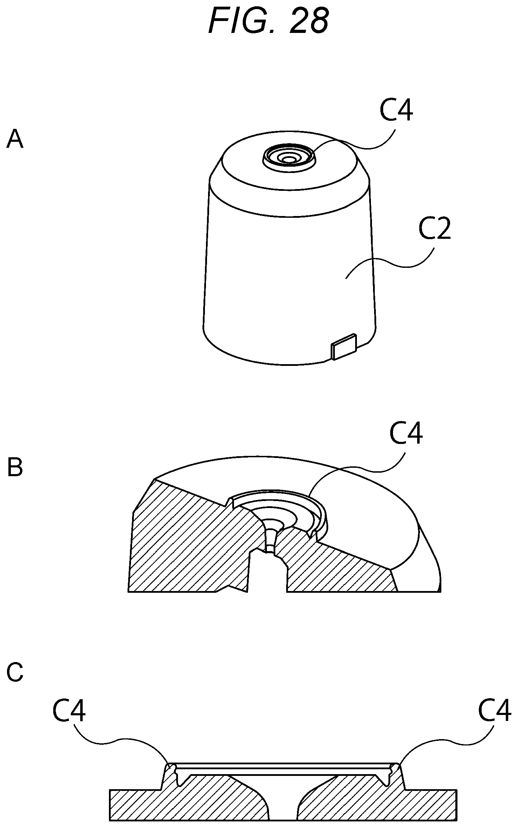

Fig. 28 is a view for describing a water-stopping shape.
A of Fig. 29 is a partially enlarged view of the water-stopping shape in a case where the water-stopping shape is a substantially annular convex shape, and B of Fig. 29 is a partially enlarged view of A of Fig. 29.
Fig. 30 is a view for describing a gap between the orifice portion C2 and the cuvette flow path P.

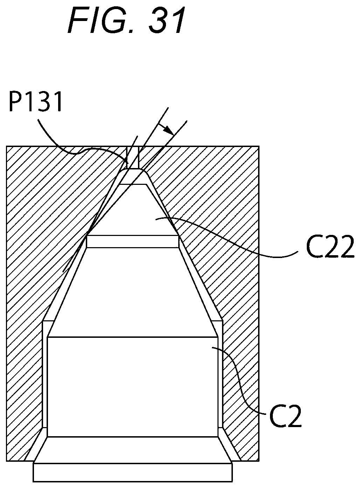

Fig. 31 is a view for describing a taper angle difference between the cuvette flow path P and the orifice portion C2.

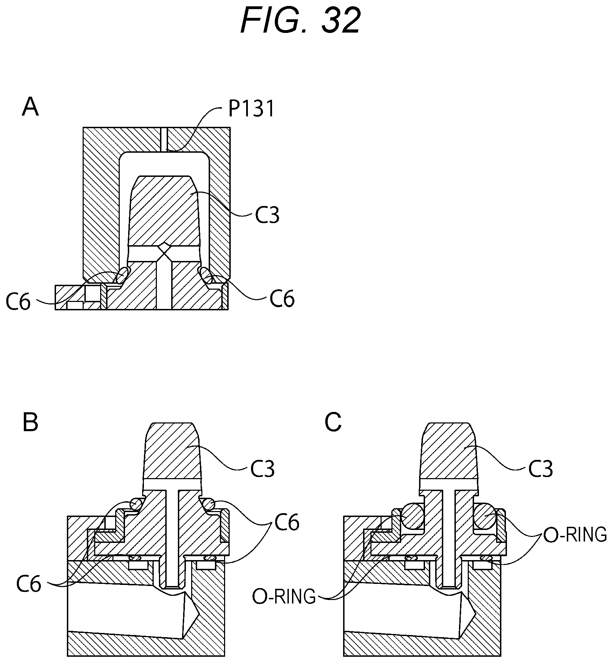

Fig. 32 is a view for describing a stop valve structure C6 in the closed orifice portion C3.
A of Fig. 33 is a front view illustrating a modification example of the second embodiment of the orifice component C according to the present technology, and B of Fig. 33 is a rear view illustrating a modification example of the second embodiment of the orifice component C according to the present technology.
A of Fig. 34 is a left side view illustrating the modification example of the second embodiment of the orifice component C according to the present technology, and B of Fig. 34 is a right side view illustrating the modification example of the second embodiment of the orifice component C according to the present technology.
A of Fig. 35 is a plan view illustrating the modification example of the second embodiment of the orifice component C according to the present technology, and B of Fig. 35 is a bottom view illustrating the modification example of the second embodiment of the orifice component C according to the present technology.

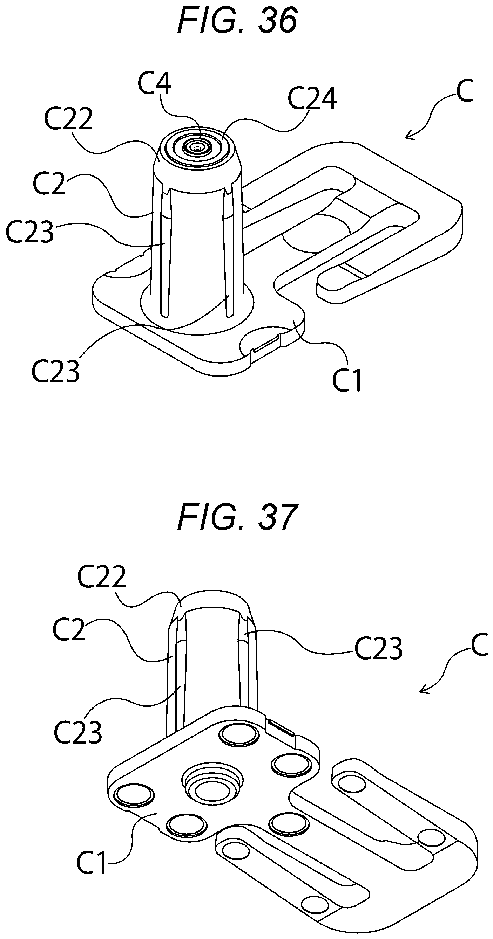

Fig. 36 is a perspective view illustrating the modification example of the second embodiment of the orifice component C according to the present technology.
Fig. 37 is a perspective view illustrating the modification example of the second embodiment of the orifice component C according to the present technology.

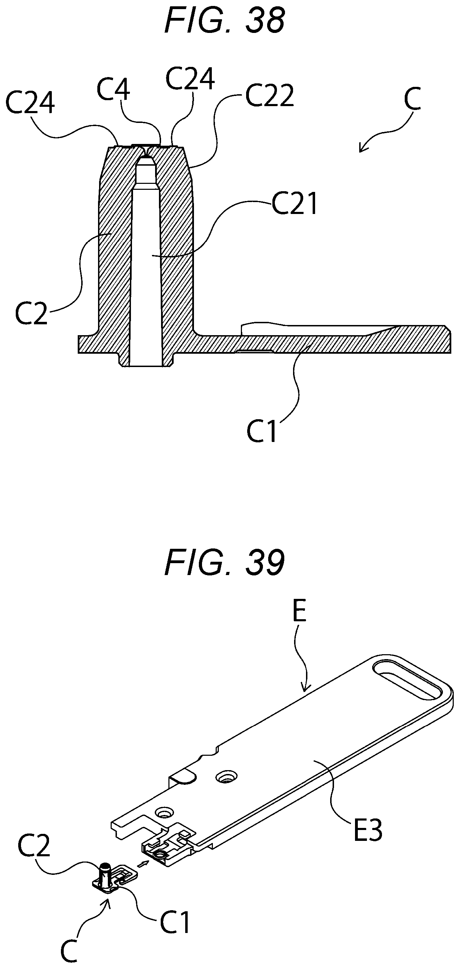

Fig. 38 is a cross-sectional view taken along line Q-Q in A of Fig. 33.
Fig. 39 is a perspective view illustrating a modification example of the embodiment of the plate E and the orifice component C different from that in Fig. 23.
A of Fig. 40 is a perspective view illustrating the embodiment of the closed orifice portion C3 in Fig. 32, and B of Fig. 40 is a perspective view illustrating a modification example of the embodiment of the closed orifice portion C3 different from that in Fig. 32.

### MODE FOR CARRYING OUT THE INVENTION

Hereinafter, preferred embodiments for carrying out the present technology will be described with reference to the drawings.

The embodiments to be described below are intended to illustrate an example of representative embodiments of the present technology, and the scope of the present technology will not be construed narrowly by these embodiments. Note that the description will be given in the following order.
1. First Embodiment (Particle Sorting System 100)
   (1) Cuvette Flow Path P
   (2) Holding Portion 11
   (3) Control Unit 12
      (3-1) Positioning between Cuvette Flow Path P and Orifice Portion C2
      (3-2) Replacement of Plate E Including Orifice Portion C2
      (3-3) Cleaning Using Plate E Including Closed Orifice Portion C3
      (3-4) Others
      (3-5) Control Example by Control Unit 12
         [Control Example 1]
         [Control Example 2]
         [Control Example 3]
      (3-6) Another Embodiment 1
      (3-7) Another Embodiment 2
   (4) Irradiation Unit 13
   (5) Detection Unit 14
   (6) Sorting Control Unit 15 (Charging Unit 15a, Deflection Plate 15b, Collection Container 15c)
   (7) Imaging Unit 20
   (8) Break-Off Control Unit
   (9) Storage Unit 17
   (10) Display Unit 18
   (11) User Interface 19
   (12) Others
2. Second Embodiment (Orifice Component C)
   (1) Base Member C1
   (2) Orifice Portion C2
   (3) Water Stop Mechanism C4
   (4) Closed Orifice Portion C3
   (5) Positioning Mechanism C23
   (6) Inclination Control Mechanism C24
3. Third Embodiment (Plate E)

### 1. First Embodiment (Particle Sorting System 100)

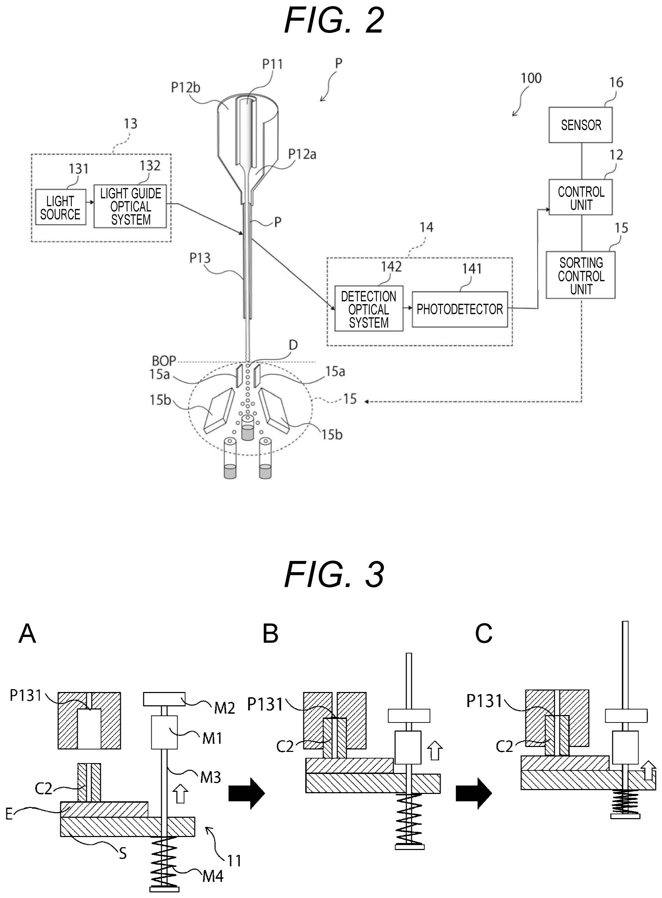

Fig. 1 is a schematic view illustrating an example of an embodiment of a particle sorting system 100 in the vicinity of a main flow path P13 of a cuvette flow path P and an orifice portion C2 according to the present technology, and Fig. 2 is a schematic view illustrating an example of a first embodiment of the particle sorting system 100 according to the present technology. Note that in Fig. 2, a holding portion 11 is omitted. The particle sorting system 100 according to the present embodiment includes at least a cuvette flow path P, a holding portion 11, and a control unit 12, and may include an irradiation unit 13, a detection unit 14, a sorting control unit 15, other parts, and the like.

Each part will be described below.

### (1) Cuvette Flow Path P

The cuvette flow path P can allow a liquid containing at least particles to flow therethrough, and the cuvette flow path P includes a main flow path P13. In the present embodiment, the particles contained in a sheath liquid are arranged substantially in a line in the main flow path P13 where optical detection is performed, and as illustrated in Fig. 2, the particles are ejected to the outside of a flow cell to be sorted.

Specifically, the sheath liquid and a fluid containing particles (hereinafter, also referred to as a "sample liquid") are first injected into a conical container through sheath liquid injection ports P12a and P12b and a sample liquid injection port P11. The conical container is installed with its apex facing vertically downward, and a tube or the like for introducing the sheath liquid is coupled to an upper side surface. The upper surface of the conical container is open, and a vibrating element is attached in a state of being sealed with an O-ring. The sample liquid is injected vertically from above the container, the vibrating element and a piston have a circular ring shape, and a pipe passes through a center hole thereof. The conical container narrows at a lowermost portion, and a tip thereof is connected to the cuvette flow path P in which the main flow path (linear flow path) P13 is formed.

Then, when a laminar flow is formed so that the sheath liquid surrounds the sample liquid in the conical container and the sheath liquid travels in a discharge direction as it is, optical detection by laser light irradiation is performed in the main flow path P13. At an end point of the main flow path P13, a nozzle outlet P131 that is attachable and detachable is installed, and as illustrated in Fig. 2, the nozzle outlet P131 has a slope shape so as to be continuously narrowed to the orifice portion C2. The sheath liquid and the sample liquid are slightly vibrated in a front-back direction with respect to the flow, from the vibrating element attached immediately above the conical container. Then, a liquid column ejected from the orifice portion C2 travels vertically downward while the neck formed at the same frequency as that of the vibration by the vibrating element expands, and is converted into a droplet at a break-off point (hereinafter, also referred to as "BOP") which is a position 10 to 20 mm away from the orifice portion C2.

The vibrating element applies vibration to the liquid containing the sheath liquid by supplying a drive voltage based on one or two or more frequencies. With this arrangement, the liquid can be continuously converted into droplets to generate a fluid stream (flow of droplets D). Note that the frequency may be a frequency domain designated by a user. The vibrating element is not particularly limited, and conventionally known vibrating elements can be appropriately selected and used, and specific examples thereof include piezoelectric elements.

In the present technology, the "particles" can widely include bio-related particles such as cells, microorganisms, and ribosomes, synthetic particles such as latex particles, gel particles, and industrial particles, and the like. Furthermore, in the present technology, the particles can be contained in a liquid sample or the like.

The bio-related particles may include chromosomes, ribosomes, mitochondria, organelles (cell organelles), and the like constituting various cells. The cell type may include animal cells (for example, blood cells, and the like), and plant cells. The microorganisms include bacteria such as Escherichia coli, viruses such as tobacco mosaic virus, fungi such as yeast, and the like. Furthermore, the bio-related particles can also include bio-related polymers such as nucleic acids, proteins, and complexes thereof. The industrial particles may be, for example, an organic or inorganic polymer material, a metal, or the like. The organic polymer material includes polystyrene, styrene/divinylbenzene, polymethyl methacrylate, and the like. The inorganic polymer material includes glass, silica, a magnetic material, and the like. The metal includes gold colloid, aluminum, and the like.

In the present technology, the particles may be labeled with one or two or more dyes such as fluorescent dyes. In this case, the fluorescent dyes available include, for example, Cascade Blue, Pacific Blue, Fluorescein isothiocyanate (FITC), Phycoerythrin (PE), Propidium iodide (PI), Texas red (TR), Peridinin chlorophyll protein (PerCP), Allophycocyanin (APC), 4',6-Diamidino-2-phenylindole (DAPI), Cy3, Cy5, Cy7, Brilliant Violet (BV421), and the like.

### (2) Holding Portion 11

The holding portion 11 holds a plate E including the orifice portion C2 that discharges the fluid containing at least the particles. Note that the "orifice portion C2" and the "plate E" will be described in "2. Second Embodiment (Orifice Component C)" and "3. Third Embodiment (Plate E)" described later.

The shape and the like of the holding portion 11 are not particularly limited as long as the holding portion can hold the plate E but it is preferable that the holding portion has a shape in which the plate E can be easily loaded. Specifically, a shape having a surface substantially vertical to a discharge axis of the droplet D from the orifice portion C2 in a part of a substantially plate shape, a substantially hemispherical shape, or the like is exemplified.

Fig. 3 is a schematic view illustrating an example of an embodiment of the holding portion 11. The holding portion 11 can move in a direction substantially parallel to the discharge axis (of the droplet D from the nozzle outlet P131) while holding the plate E, and the movement is controlled by the control unit 12 described later. Specifically, the holding portion 11 includes a lifting/lowering control mechanism including a motor M1, a potentiometer M2, a stage drive shaft M3, and a stage compression spring M4, and includes a stage S on which the plate E is loaded. Note that the lifting/lowering control mechanism is not limited to this configuration in the present technology, and is not particularly limited as long as the position of the stage S can be changed.

Specifically, as illustrated in A of Fig. 3, when the stage S is raised, the stage S is raised while no spring force is applied (the spring is not compressed). Next, when the stage S is further raised, as illustrated in B of Fig. 3, the orifice portion C2 and the nozzle outlet P131 of the cuvette flow path P are only in contact with each other, and no spring force is applied. In the present embodiment, the potentiometer M2 detects not the position of the stage S but the position of the stage drive shaft M3. Finally, when the stage S is further raised, the spring is compressed as illustrated in C of Fig. 3, so that the orifice portion C2 and the nozzle outlet P131 are press-fitted by the force. Furthermore, the holding portion 11 may move in a desired direction such as a substantially vertical direction relative to the discharge axis as necessary.

In the present embodiment, one or two or more sensors that detect the position of the stage S may be provided. Examples thereof include a sensor that detects an upper end or a lower end of the stage S that has moved, but the present technology is not limited thereto. Furthermore, although not illustrated, the holding portion 11 may be provided with a structure such as a stopper that physically prevents the plate E from being pushed too far into the stage S when the plate E is loaded, or the control unit 12 may issue a warning to the user by detecting this with the sensor 16 or the like.

### (3) Control Unit 12

The control unit 12 performs control to change the position of the holding portion 11 to be substantially parallel to the discharge axis of the droplet D from the nozzle outlet P131. Furthermore, as will be described later, control other than the control described above may be performed as necessary.

### (3-1) Positioning between Cuvette Flow Path P and Orifice Portion C2

As described above, in the conventional technology, it has been difficult to align the cuvette flow path and the orifice with desired fitting accuracy due to mechanism play, component tolerance, and the like. However, in the present technology, the aligning of the holding portion 11 that holds the plate E including the orifice portion C2 is realized by the lifting/lowering control mechanism described above, and the control unit 12 can mechanically change the position of the holding portion to be substantially parallel to the discharge axis, so that it is not necessary for the user himself/herself to perform the alignment. Therefore, alignment between the cuvette flow path P and the orifice portion C2 can be mechanically controlled, and highly accurate alignment can be performed. Furthermore, as a result, it is possible to eliminate a factor that destabilizes the flow stream, and it is possible to reduce the effort of the user to readjust the position of the orifice.

Specifically, in the present embodiment, the cuvette flow path P and the plate E can be positioned based on their shapes. Specifically, when the control unit 12 raises the holding portion 11 substantially parallel to the discharge axis, positioning based on engagement between a positioning pin P41 provided on the cuvette flow path P side and an engagement portion E4 of the plate E can be exemplified.

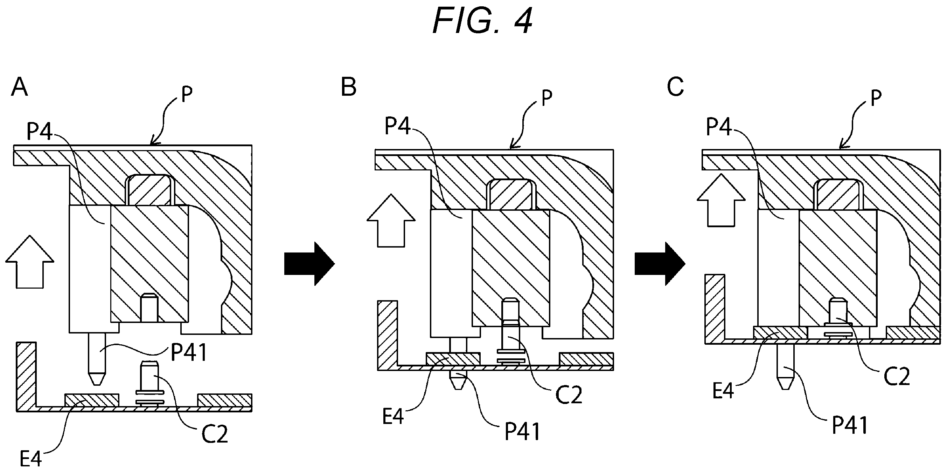

Fig. 4 is an explanatory view for describing positioning (coarse adjustment) between the cuvette flow path P and the orifice portion C2. More specifically, as illustrated in A to C of Fig. 4, the positioning pin P41 for the plate E is provided on a cuvette holder P4 side holding the cuvette flow path P, and the engagement portion E4 with which the positioning pin is engaged is provided on the plate E side, so that the positioning pin P41 is engaged with the engagement portion, and the position of the plate E can be determined with respect to the cuvette flow path P. The shape of the engagement portion E4 is not particularly limited as long as the positioning pin P41 can be engaged with the engagement portion E4, and the engagement portion E4 can be appropriately designed into a shape such as a through-hole, a hole, a holder, or a groove. Furthermore, the number of the positioning pins P41 is not particularly limited, and may be one or two or more. Furthermore, accordingly, the number of the engagement portions E4 is not particularly limited as long as the number of the engagement portions E4 is the same as the number of the positioning pins P41.

Furthermore, the control unit 12 can control the positioning of the cuvette flow path P and the plate E in multiple stages. Specifically, the positioning based on the engagement between the positioning pin P41 provided on the cuvette flow path P side and the engagement portion E4 of the plate E described above can be performed in two stages such as coarse adjustment and more accurate fine adjustment as described later.

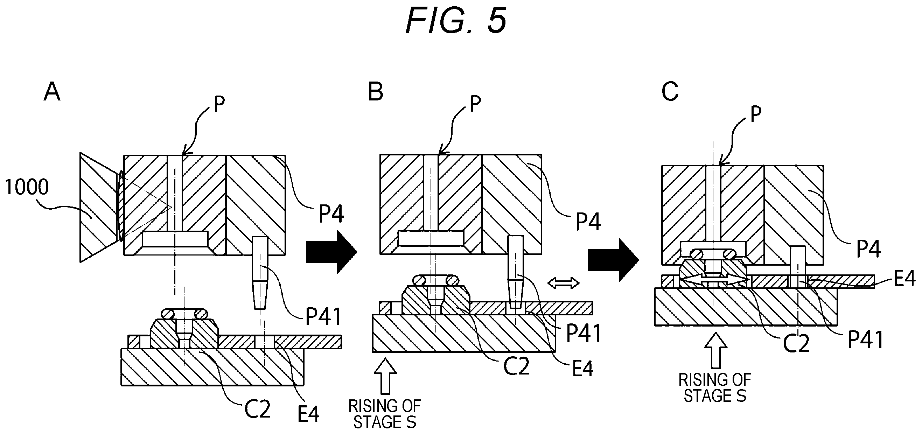

Fig. 5 is an explanatory view for describing positioning (fine adjustment) between the cuvette flow path P and the orifice portion C2. More specifically, the coarse adjustment is as described above, but the fine adjustment can include positioning based on fitting of the lower end of the cuvette flow path P (= nozzle outlet P131) and the upper end of the orifice portion C2, as illustrated in A to C of Fig. 5. In this case, the fitting is preferably based on an uneven shape, and it is more preferable that the nozzle outlet P131 functions as a concave portion and the orifice portion C2 functions as a convex portion. With this arrangement, more accurate positioning is possible.

Furthermore, in this case, it is preferable that the orifice portion C2 has a tapered shape C22 in a part thereof. Specifically, as illustrated in Fig. 20 and the like to be described later, the tapered shape C22 is preferably continuously formed in a substantially annular shape so as to surround a coupling portion (in Fig. 20 and the like, the connection surface) with the cuvette flow path P through which a liquid containing particles flows. Due to the tapered shape C22, the orifice portion C2 is smoothly pulled into the concave portion formed in the nozzle outlet P131.

Furthermore, in this case, the orifice portion C2 is preferably movable in any one or more directions of a group including a substantially parallel direction, a substantially vertical direction, and a substantially rotational direction with respect to the discharge axis. With this arrangement, even if a slight positional deviation occurs at the time of the fitting, even a slight positional deviation due to a play with respect to the plate E, which the orifice portion C2 has, can be covered, and in combination with the tapered shape C22, smooth positioning (fitting) can be performed without damaging each component.

As described above, in the present embodiment, since positioning is performed in two stages of coarse adjustment and fine adjustment, the cuvette flow path P (in particular, the nozzle outlet P131) and the orifice portion C2 can be more accurately positioned as compared with the conventional technology. Furthermore, since the holding portion 11 automatically moves in a direction substantially parallel to the discharge axis by being controlled by the control unit 12, it is not necessary for the user himself/herself to perform positioning, and usability is also improved. Note that in the example described above, positioning in two stages has been described, but the present technology is not limited thereto, and positioning in three or more stages may be performed.

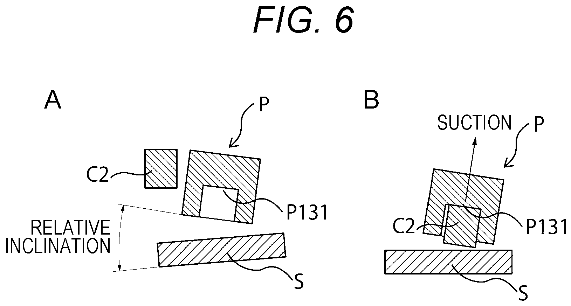

It is preferable that the control unit 12 performs control to suck the orifice portion C2 toward the cuvette flow path P side in accordance with the rise of the holding portion. Specifically, the stage S of the holding portion 11 and the cuvette flow path P may be slightly inclined relative to each other (see Fig. 6), and in this case, the postures of the stage S and the cuvette flow path P at the time of press-fitting are affected. Therefore, in order to reduce the influence of the relative inclination, the cuvette flow path P and the orifice portion C2 are temporarily brought into contact with each other by suction (for example, air suction such as a degassing pump), and then the control unit 12 controls the rising by the holding portion 11 to finally press-fit the orifice portion C2 and the cuvette flow path P.

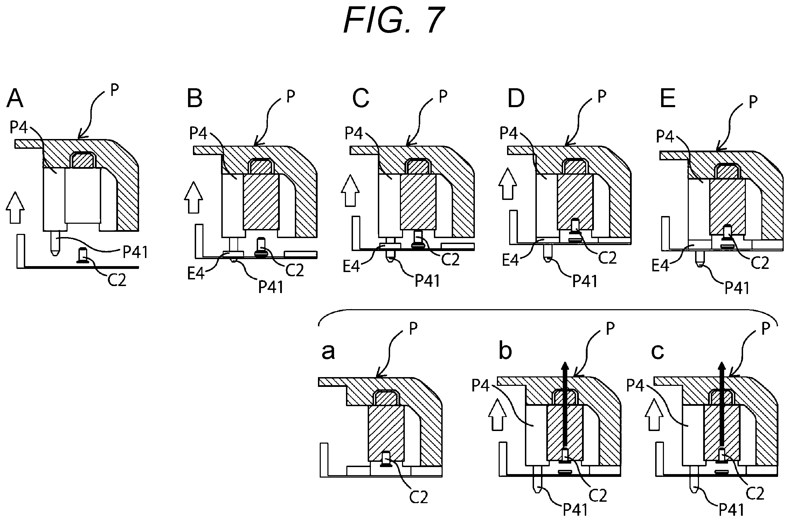

Fig. 6 is a view for describing a state in which the stage S of the holding portion 11 and the cuvette flow path P are relatively inclined. More specifically, as illustrated in Fig. 7, it is necessary to eliminate the relative inclination as much as possible, and the orifice portion C2 is first aligned with the cuvette flow path P by the suction operation.

Fig. 7 is a view for describing a state in which the control unit 12 controls a process of sucking the orifice portion C2 toward the cuvette flow path P side in addition to the two-stage positioning. First, as illustrated in A of Fig. 7, the holding portion 11 loads the plate E including the orifice portion C2 on the stage S. Next, as illustrated in B of Fig. 7, the stage S is raised and moved to the vicinity of the insertion location of the cuvette flow path P (= the nozzle outlet P131 having the concave portion). Next, as illustrated in C of Fig. 7, fitting between the cuvette flow path P and the orifice portion C2 is performed in the two-stage positioning.

Next, as illustrated in D of Fig. 7, the stage S is raised and moved to the vicinity of the nozzle outlet P131 of the cuvette flow path P so that the stage S is in close contact with the nozzle outlet P131. Here, D of Fig. 7 is divided into a to c and described in detail. First, as illustrated in a of Fig. 7, the stage S is stopped before the orifice portion C2 comes into close contact with the nozzle outlet P131. Next, as illustrated in b of Fig. 7, the orifice portion C2 is sucked upward in a direction substantially parallel to the discharge axis (see the black arrow in b of Fig. 7), the orifice portion C2 is lifted, and the top surface of the orifice portion C2 is aligned with the lower surface of the nozzle outlet P131. Then, as illustrated in c of Fig. 7, the top surface of the orifice portion C2 and the lower surface of the nozzle outlet P131 are press-fitted while raising the stage S.

From the above, as illustrated in E of Fig. 7, the suction operation is stopped, and the orifice portion C2 and the nozzle outlet P131 are accurately brought into close contact with each other.

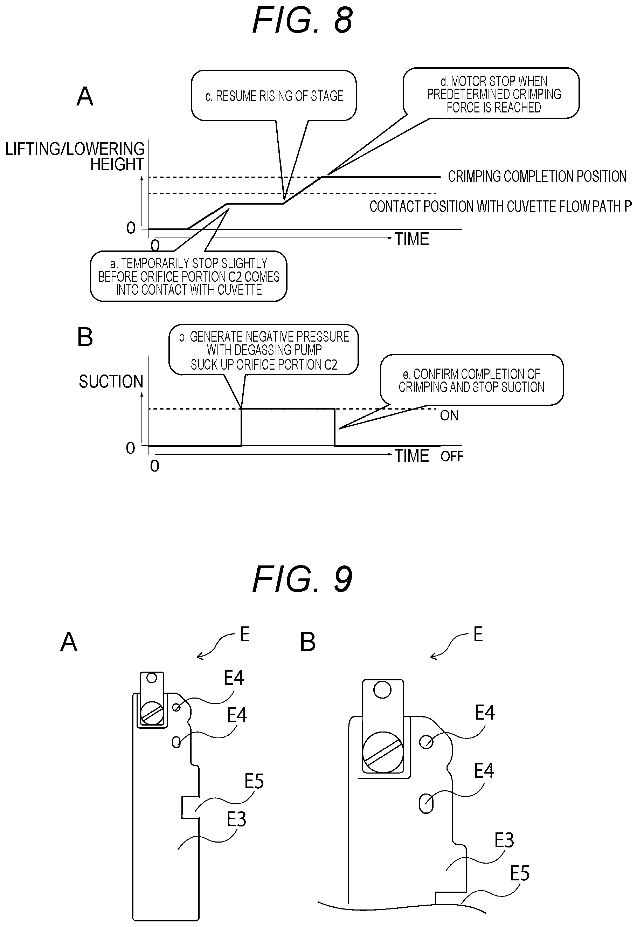

A of Fig. 8 is a view for describing a lifting/lowering height of the stage S (position of a potentiometer M2), and B of Fig. 8 is a view for describing a movable state of suction (degassing pump). Here, the lifting/lowering height (movement of the stage S) and on/off of the degassing pump will be described with reference to Fig. 8. First, as illustrated in a of A of Fig. 8, the control unit 12 that has raised the stage S temporarily stops slightly before the orifice portion C2 comes into contact with the cuvette flow path P. Here, it is preferable that the degassing pump is temporarily stopped at a position where the orifice portion C2 can be sufficiently sucked. Next, as illustrated in b of B of Fig. 8, a negative pressure is generated by the degassing pump to suck up the orifice portion C2 in the direction of the cuvette flow path P. Then, while the suction is continued, the stage S is controlled by the control unit 12 to resume the rising (see c of A of Fig. 8), and stops the rising when a predetermined press-fitting force (for example, 10 N to 50 N, and the like) is reached (see d of A of Fig. 8). Finally, as illustrated in e of B of Fig. 8, the degassing pump stops operating after confirming whether or not the press-fitting is properly performed. In this way, as described above, it is possible to perform final press-fitting using the holding portion 11 after aligning the orifice portion C2.

### (3-2) Replacement of Plate E Including Orifice Portion C2

In the present embodiment, the plate E including the orifice portion is replaceable with a plate E including a closed orifice portion C3 for cleaning inside of the cuvette. With this arrangement, it is possible to clean the inside of the cuvette.

The positioning between the cuvette flow path P and the closed orifice portion C3 is similar to that described in "(3-1) Positioning between Cuvette Flow Path P and Orifice Portion C2" described above, and thus the description thereof is omitted here.

Here, the particle sorting system 100 according to the present embodiment may include a sensor 16. Specific examples thereof include a plate presence/absence sensor that discriminates the presence or absence of the plate E, a cleaning nozzle sensor that discriminates whether or not it is a cleaning nozzle, and a sensor that detects that the stage S has reached the upper end or the lower end in the holding portion 11 described above, but the present technology is not limited thereto.

More specifically, the control unit 12 receives a signal from the plate presence/absence sensor, and discriminates the presence or absence of the plate E. With this arrangement, it is possible to prevent various flows controlled by the control unit 12 from proceeding while the plate E is not held by the holding portion 11.

In addition, the control unit 12 can receive a signal from the cleaning nozzle sensor, discriminate whether or not it is a cleaning nozzle, and control, for example, a degassing pump or the like to clean the inside of the cuvette in a case where it is discriminated to be the cleaning nozzle.

Note that the discrimination method by the sensor 16 is not particularly limited, but can be performed on the basis of a part of the shape of each plate E. Specifically, the discrimination is made by changing the presence or absence of a cutout portion E5 between the plate E including the orifice portion C2 and the plate E including the closed orifice portion C3. More specifically, as illustrated in Fig. 9, in the plate E including the closed orifice portion C3, the cutout portion E5 detected by the cleaning nozzle sensor is provided in a part of the plate E in the longitudinal direction of the main body E3, and on the other hand, although not illustrated, the plate E including the orifice portion C2 is designed not to include the cutout portion E5 detected by the cleaning nozzle sensor. Note that in Fig. 9, the cutout portion E5 is adopted as the shape detected by the cleaning nozzle sensor, but the present technology is not limited thereto, and a hole, a through-hole, a protrusion, a groove, or the like may be used instead of the cutout portion.

In addition, the control unit 12 controls the plate E including the orifice portion C2 or the plate E including the closed orifice portion C3 to be in a detachable state in a case where it is discriminated that the holding portion 11 has reached the lower end using a sensor that detects that the stage S has reached the lower end in the holding portion 11, a stopper component, or the like. Specifically, when the plate E including the orifice portion C2 or the plate E including the closed orifice portion C3 is detached by the user during the lifting/lowering of the holding portion 11, there is a possibility that various components are damaged or an error occurs. Therefore, the holding portion 11 can be detached after reaching the lower end, and the occurrence of damages and errors on various components described above can be avoided.

The control unit 12 can change the pressure of the holding portion 11 in the rising direction on the discharge axis when the orifice portion C2 or the closed orifice portion C3 abuts on the cuvette flow path P. Specifically, the pressure of the orifice portion C2 at the time of abutting can be set to be larger than the pressure of the closed orifice portion C3. With this arrangement, the orifice portion C2 and the nozzle outlet P131 can be more reliably brought into close contact with each other. Furthermore, it is not always necessary to set the pressures to be different between the two, and the pressure of the orifice portion C2 at the time of abutting may be set to be equal to the pressure of the closed orifice portion C3 as necessary.

### (3-3) Cleaning Using Plate E Including Closed Orifice Portion C3

In the present embodiment, as described in "(3-2) Replacement of Plate E Including Orifice Portion C2" described above, the plate E including the orifice portion C2 can be replaced with the plate E including the closed orifice portion C3. In a case where the plate E including the orifice portion C2 is replaced with the plate E including the closed orifice portion C3, the inside of the cuvette flow path P can be cleaned using the closed orifice portion C3. Fig. 10 is a view for describing cleaning (normal time and abnormal time) using the plate E including the closed orifice portion C3. Hereinafter, cleaning using the plate E including the closed orifice portion C3 will be described with reference to Fig. 10.

A to E of Fig. 10 are views for describing cleaning (normal time) using the plate E including the closed orifice portion C3.

First, as illustrated in A of Fig. 10, a cleaning liquid is fed to the cuvette flow path P. Note that a waste liquid flows around the closed orifice portion C3, reaches a closed nozzle C31, and is discharged. Next, as illustrated in B of Fig. 10, the inside of the cuvette flow path P is immersed in the cleaning liquid (cleaner liquid). In this case, the discharge from the closed nozzle C31 is also temporarily stopped. Next, as illustrated in C of Fig. 10, pure water (also including ultrapure water) or a sheath liquid is fed. At this time, there is a residue in the closed nozzle C31. Next, as illustrated in D of Fig. 10, the inside of the cuvette flow path P is immersed in pure water or the sheath liquid. In this case, the discharge from the closed nozzle C31 is also temporarily stopped. Here, by repeating the processes of C of Fig. 10 to D of Fig. 10 again, the residue concentration can be reduced, and thus the processes may be repeated once or twice or more as necessary. Finally, as illustrated in E of Fig. 10, the inside of the cuvette flow path P is replaced with the pure water or the sheath liquid, and the process is terminated.

F of Fig. 10 is a view for describing cleaning (in abnormal conditions) using the plate E including the closed orifice portion C3. Therefore, the cleaning method illustrated in Fig. 10 is not used at the normal time, but is performed in a case of clogging or the like in the cuvette flow path P. Hereinafter, emergency cleaning using the plate E will be described with reference to Fig. 10.

First, as illustrated in F of Fig. 10, pure water or a sheath liquid is fed (backflowed) from the closed nozzle C31 to remove clogging or the like of the cuvette flow path P. Note that after the backflow cleaning operation is performed, the cuvette flow path P is always cleaned with a cleaning liquid (preferably, a cleaning liquid containing an agent) to eliminate the influence of the contaminated closed nozzle C31. Examples of the cleaning operation include the method described with reference to A to E of Fig. 10 described above.

### (3-4) Others

Furthermore, the control unit 12 can correct a detection value detected by the detection unit 14 and calculate a feature amount of each particle. Specifically, the feature amount such as a size, a form, and an internal structure of the particle is calculated from a detection value of the received fluorescence or scattered light. Furthermore, sorting determination is performed on the basis of the calculated feature amount, a sorting condition received from the user interface 19 described later, and the like, and a sorting control signal is generated. By controlling a charging unit 15a to be described later based on the sorting control signal, particles of a specific type are sorted and collected.

Furthermore, the control unit 12 may be coupled to the imaging element, the detection unit 14, and the like, and perform analysis on the basis of an image acquired by the imaging element, a signal detected by the detection unit 14, and the like. Specifically, data on the state of the droplet D is analyzed or calculated from the image acquired by the imaging element. Furthermore, from the data on the state of the droplet D, the BOP variation amount; ΔBOP (difference in break-off position), or the like may be obtained.

The control unit 12 may be included in a housing in which the detection unit 14 and the like are provided, or may be outside the housing. Furthermore, the control unit 12 may be coupled to each unit of the particle sorting system 100 in a wired or wireless manner via a network.

### (3-5) Control Example by Control Unit 12

Hereinafter, a control example by the control unit 12 will be described with reference to a flowchart.

### [Control Example 1]

Fig. 11 is a flowchart for describing a flow at the time of starting sorting.

In the flowchart illustrated on the left side of Fig. 11, first, sorting setup is started (S101). Specifically, the user is notified of an insertion instruction of the plate E (S102). Specifically, the user is instructed to insert the plate E into the display unit 18 using a GUI or the like. Next, for example, when a predetermined condition (for example, confirming the insertion of the plate E by detecting with a sensor) is satisfied, a button such as "Next" can be pressed (activated), and the process proceeds to the next flow (S103). On the other hand, in a case where the predetermined condition is not satisfied, the user is notified of the insertion instruction of the plate E again (S102).

Next, it is discriminated whether or not a cleaning nozzle (= closed orifice portion C3) is attached (S104). In a case where a cleaning nozzle is attached, the user is notified of an alert (S105). Then, the process is prevented from proceeding to the subsequent flow, and the display unit 18 may display a message to the user to confirm again whether or not a cleaning nozzle is attached, or the user may be instructed by voice to confirm again by voice notification or the like. After confirming again, the user then starts over from S102.

On the other hand, in a case where a cleaning nozzle is not attached, the control unit 12 receives a lifting/lowering instruction of the holding portion 11 (S106). The lifting/lowering instruction may be switched to automatic lifting/lowering, but lifting/lowering may be started by the user's instruction via the user interface 19. In the case of automatic lifting/lowering, there is a possibility that user's fingers may get caught. Therefore, it is preferable that the lifting/lowering instruction is performed by the user's instruction after an exterior door is closed.

Next, the control unit 12 starts lifting/lowering of the stage S (S107). Basically, here, the holding portion 11 is raised, but an operation such as temporarily stopping or lowering may be performed as necessary. Next, it is discriminated whether or not the lifting/lowering height of the stage S (the position of the potentiometer M2) is a predetermined position (S108). Here, in a case where the position is higher or lower than the predetermined position, the control unit 12 controls the holding portion 11 to perform adjustment, and thus the process returns to S107. On the other hand, in a case where the position is the predetermined position, the control unit 12 stops the lifting/lowering of the holding portion 11 (S109), and notifies each part of the particle sorting system 100 of the attachment completion of the orifice portion C2 (S110). Here, the attachment completion may be transmitted to the user using a GUI or the like via the display unit 18. With this arrangement, the sorting setup is complete and the process can proceed to the next step.

In the flowchart illustrated on the left side of Fig. 11, positioning and suction operation in two stages are performed between S106 and S109.

Hereinafter, the positioning and suction operation in two stages will be described with reference to a flowchart illustrated on the right side of Fig. 11.

In the flowchart illustrated on the right side of Fig. 11, first, first-stage lifting/lowering is started (S111). This corresponds to the "coarse adjustment" described above. Next, the control unit 12 discriminates whether or not the lifting/lowering height of the stage S (the position of the potentiometer M2) is a predetermined position (S112). In a case where it is higher or lower than the predetermined position, the process returns to S111. On the other hand, in a case where it is the predetermined position, the control unit 12 stops the first-stage lifting/lowering (S113). Next, the control unit 12 starts the suction operation (S114), but basically starts the suction operation when the stage S reaches a position determined in advance by design. There are several start patterns of the suction operation, and examples thereof include a pattern in which the suction operation is performed after the lifting/lowering is stopped and the lifting/lowering is resumed, a pattern in which the suction operation is started when the stage S reaches the position determined in advance by design while continuing the lifting/lowering, and the like.

Next, the control unit 12 determines whether or not a predetermined time has elapsed from the start of the suction operation using a timer or the like (S115). In a case where the predetermined time has not elapsed, the process returns to S114 to continue the suction operation. On the other hand, in a case where the predetermined time has elapsed, the control unit 12 stops the suction operation (S116). Note that in the present embodiment, the determination may be made on the basis of a pressure measured by a pressure gauge or the like installed on the suction side instead of the determination based on the predetermined time in S115.

Next, second-stage lifting/lowering is started (S117). This corresponds to the "fine adjustment" described above. Next, the control unit 12 discriminates whether or not the lifting/lowering height of the stage S (the position of the potentiometer M2) is a predetermined position (S118). In a case where it is not the predetermined position, the process returns to S117. On the other hand, in a case where it is the predetermined position, the operations indicated in S109 to S110 of the flowchart illustrated on the left side of Fig. 11 are performed.

### [Control Example 2]

Fig. 12 is a flowchart for describing a flow at the time of cleaning.

In the flowchart illustrated in Fig. 12, first, cleaning is started (S201). Specifically, the user is notified of an insertion instruction of the plate E (S202). Specifically, the user is instructed to insert the plate E into the display unit 18 using a GUI or the like. Next, for example, when a predetermined condition (for example, confirming the insertion of the plate E by detecting with a sensor) is satisfied, a button such as "Next" can be pressed (activated), and the process proceeds to the next flow (S203). On the other hand, in a case where the predetermined condition is not satisfied, the user is notified of the insertion instruction of the plate E again (S202).

Next, it is discriminated whether or not a cleaning nozzle (= closed orifice portion C3) is attached (S204). Here, in a case where a cleaning nozzle is not attached, the user is notified of an alert (S205). Then, the process is prevented from proceeding to the subsequent flow, and the display unit 18 may display a message to the user to confirm again whether or not a nozzle other than the cleaning nozzle is attached, or the user may be instructed by voice to confirm again by voice notification or the like. After confirming again, the user then starts over from S202.

On the other hand, in a case where a cleaning nozzle is attached, the control unit 12 receives a lifting/lowering instruction of the holding portion 11 (S206). The lifting/lowering instruction may be switched to automatic lifting/lowering, but lifting/lowering may be started by the user's instruction via the user interface 19. In the case of automatic lifting/lowering, there is a possibility that user's fingers may get caught. Therefore, it is preferable that the lifting/lowering instruction is performed by the user's instruction after an exterior door is closed.

Next, the control unit 12 starts lifting/lowering of the stage S (S207). Basically, here, the stage S is raised, but an operation such as temporarily stopping or lowering may be performed as necessary. Next, it is discriminated whether or not a lifting/lowering height of the stage S (the position of the potentiometer M2) is a predetermined position (S208). Here, in a case where the position is higher or lower than the predetermined position, the control unit 12 controls the holding portion 11 to perform adjustment, and thus the process returns to S207. On the other hand, in a case where the position is the predetermined position, the control unit 12 stops the lifting/lowering of the holding portion 11 (S209), and notifies each part of the particle sorting system 100 of the attachment completion of the closed orifice portion C3 (S210). Here, the attachment completion may be transmitted to the user using a GUI or the like via the display unit 18. With this arrangement, the setup at the time of cleaning is completed, and the process can proceed to the next step (for example, start of driving of the pump, and the like).

### [Control Example 3]

Fig. 13 is a flowchart for describing a flow when sorting or cleaning is completed.

In the flowchart illustrated in Fig. 13, first, sorting or cleaning is completed (S301). Next, the control unit 12 receives a signal for starting detachment of the plate E (S302). Next, the control unit 12 controls to start lowering of the stage S (S303). Basically, here, the stage S is lowered, but an operation such as temporarily stopping or raising may be performed as necessary. Next, the control unit 12 discriminates whether or not the stage S has reached the lower end (S304). Specifically, the control unit 12 discriminates whether or not the stage S has reached using a sensor or the like that detects the lower end of the stage S.

In a case where the stage S has not reached the lower end, the process returns to S303. On the other hand, in a case where the stage S has reached the lower end, the user is notified of a detachment instruction of the plate E via the display unit 18 using a GUI or the like (S306). Then, the detachment of the plate E including the orifice portion C2 or the plate E including the closed orifice portion C3 is completed (S307).

### (3-6) Another Embodiment 1

Fig. 26 is a schematic view illustrating an example of an embodiment (Another Embodiment 1) different from that in Fig. 1 in the vicinity of the cuvette flow path P and the orifice portion C2. A of Fig. 26 is a view for describing an attachment state, and B and C of Fig. 26 are views for describing an attachment procedure.

A and B of Fig. 26 are cross-sectional side views of the cuvette flow path P and the orifice portion C2. In the present embodiment, the orifice portion C2 has a cylindrical shape, and positioning is performed by a cylindrical top surface and a cylindrical outer peripheral surface. Next, after the positioning, the top surface of the orifice portion C2 and the lower surface of the nozzle outlet P131 are press-fitted by lifting/lowering the holding portion 11. At the time of press-fitting and fixing, positioning is performed by a convex portion of a cylindrical portion and a concave portion of the nozzle outlet P131.

In C of Fig. 26, the cuvette flow path P and the orifice portion C2 are illustrated as cross-sectional bottom views. Specifically, as the first-stage positioning (coarse adjustment), positioning is performed in an X-Y direction by an arc portion formed in the orifice portion C2 and an arc portion of the cuvette flow path P. Next, as the second-stage positioning, positioning (fine adjustment) is performed by a cylindrical portion of the orifice portion C2 and a cylindrical portion of the cuvette flow path P. In terms of performing positioning in two stages, Another Embodiment 1 is based on the similar technical idea to the embodiment described above.

### (3-7) Another Embodiment 2

Fig. 27 is a schematic view illustrating an example of an embodiment (Another Embodiment 2) different from that in Fig. 1 in the vicinity of the cuvette flow path P and the orifice portion C2. A of Fig. 27 is a view for describing an attachment state, and B and C of Fig. 27 are views for describing an attachment procedure.

A and B of Fig. 27 are cross-sectional side views of the cuvette flow path P and the orifice portion C2. In the present embodiment, positioning is performed by forming an arcuate surface in the orifice portion C2 and forming a flat surface in the plate E. Next, after the positioning, the top surface of the orifice portion C2 and the lower surface of the nozzle outlet P131 are press-fitted by lifting/lowering the holding portion 11. The present embodiment is a mechanism for positioning one flat surface and one arc, rather than three flat surfaces.

In C of Fig. 27, the cuvette flow path P and the orifice portion C2 are illustrated as cross-sectional bottom views.

Specifically, as the first-stage positioning (coarse adjustment), positioning is performed in an X-Y direction by an arc portion formed in the orifice portion C2 and an arc portion of the cuvette flow path P. Next, as the second-stage positioning, positioning (fine adjustment) is performed between the flat surface portion of the plate E and the flat surface portion of the cuvette flow path P. In terms of performing positioning in two stages, Another Embodiment 2 is based on the similar technical idea to the embodiment described above.

### (4) Irradiation Unit 13

Fig. 14 is a schematic view illustrating another example of the first embodiment of the particle sorting system 100 according to the present technology. Note that in Fig. 14, the holding portion 11 is omitted.

Each part will be described below.

The particle sorting system 100 according to the present embodiment may include an irradiation unit 13. The irradiation unit 13 irradiates a part of the main flow path P13 through which a liquid containing particles flows with laser light. Specifically, the particles fed in a state of being arranged substantially in a line at the center of the three-dimensional laminar flow in the main flow path P13 are irradiated with laser light.

As illustrated in Fig. 2, the irradiation unit 13 may include one or two or more light sources 131. In a case where the irradiation unit 13 includes a plurality of light sources 131, it may be configured such that laser light beams emitted from the plurality of light sources 131 are multiplexed, and the particles are irradiated with the multiplexed laser light beams. Furthermore, the irradiation unit 13 may be configured to emit laser light beams from the plurality of light sources 131 at different positions in the flow direction of the liquid. In the present technology, the plurality of light sources 131 may emit laser light beams having the same wavelength or may emit laser light beams having different wavelengths.

The type of the laser light emitted from the irradiation unit 13 is not particularly limited, and examples thereof include a semiconductor laser, an argon ion (Ar) laser, a helium-neon (He-Ne) laser, a dye laser, a krypton (Cr) laser, and a solid-state laser in which a semiconductor laser and a wavelength conversion optical element are combined. Furthermore, two or more of these can be used in combination.

As illustrated in Fig. 2, the irradiation unit 13 can include a light guide optical system 132 for guiding the laser light to a predetermined position. The light guide optical system may include, for example, optical components such as a beam splitter group, a mirror group, and an optical fiber. Furthermore, the light guide optical system 132 may include a lens group for collecting the multiplexed excitation light, and includes, for example, an objective lens 1000 (see Fig. 1).

### (5) Detection Unit 14

The particle sorting system 100 according to the present embodiment may include a detection unit 14. The detection unit 14 detects light generated by the irradiation of the laser light by the irradiation unit 13 described above. Specifically, by irradiating the particle with laser light, fluorescence or scattered light (for example, forward scattered light, backward scattered light, side scattered light, Rayleigh scattering, Mie scattering, and the like) that is measurement target light generated from the particle is detected.

The detection unit 14 may include at least one or more photodetectors 141 that detect the measurement target light. The photodetector 141 includes one or more light receiving elements and may have a light receiving element array. Furthermore, the photodetector 141 may include one or two or more photodiodes such as a PMT (photomultiplier tube), an Avalanche Photodiode (APD), and a Multi-Pixel Photon Counter (MPPC) as light receiving elements. In this case, the photodetector 141 may be, for example, a PMT array in which two or more PMTs are arranged in a one-dimensional direction. Furthermore, the photodetector 141 may include an imaging element such as a Charge Coupled Device (CCD) or a Complementary Metal-Oxide-Semiconductor (CMOS).

The detection unit 14 can include a signal processing unit such as an A/D converter that converts an electrical signal obtained by the photodetector 141 into optical data (digital signal). The optical data obtained by the conversion by the signal processing unit is transmitted to the control unit 12 described above. Examples of the optical data include optical data including fluorescence data, and specifically include light intensity data (for example, feature amounts such as Area, Height, and Width) of light including fluorescence.

Furthermore, the detection unit 14 can include a detection optical system 142 that causes light of a predetermined detection wavelength to reach the corresponding photodetector 141. The detection optical system 142 includes, for example, a spectroscopic unit such as a prism or a diffraction grating, a wavelength separation unit such as a dichroic mirror or an optical filter.

### (6) Sorting Control Unit 15 (Charging Unit 15a, Deflection Plate 15b, Collection Container 15c)

The particle sorting system 100 according to the present embodiment may include a sorting control unit 15. The sorting control unit 15 includes charging units 15a, deflection plates 15b, and collection containers 15c. The charging unit 15a applies a charge to the deflection plate 15b on the basis of the optical data detected by the detection unit 14 described above. Specifically, a charge signal is applied to the deflection plate 15b as necessary, whereby a positive or negative charge is charged to the desired droplet D.

Note that the charging unit 15a may correct a charge amount of the droplet D. Specifically, so-called defanning (Defanning) in which a voltage corresponding to correction is applied to the charge signal is performed. With this arrangement, it is possible to prevent a zero charged droplet group, that is, the spread of a center stream, and it is possible to narrow the collection container 15c, so that it is possible to narrow a deflection angle of a side stream by that amount. Furthermore, in a case where sorting is performed at a high frequency (for example, sorting with few zero charged droplets inserted in between, and the like) or in a case where charging is continuously performed in the same direction, the side stream is also affected by the charge of the front proximate droplet, and thus, it is possible to prevent the side stream from being split by performing the defanning.

The deflection plate 15b controls a traveling direction of the desired droplet D depending on the presence or absence of an electrical force and a magnitude thereof, and guides the droplet D to a predetermined collection container 15c. Specifically, the traveling direction of each droplet D in the fluid stream is deflected by an electrical force acting with the positive or negative charge applied to the droplet D, and the droplet D is guided to the predetermined collection container 15c, and as illustrated in Fig. 2, the deflection plates 15b are arranged to face each other across the fluid stream. The deflection plate 15b is not particularly limited, and conventionally known electrodes can be used. Different positive or negative voltages are applied to the deflection plates 15b, and when the charged droplet D passes through the electric field formed by the voltages, an electric force (Coulomb force) is generated, and each droplet D is attracted toward any one of the deflection plates 15b.

A plurality of the collection containers 15c can be arranged substantially in a line in an opposing direction of the deflection plates 15b. The collection container 15c is not particularly limited, and examples thereof include a plastic tube, a glass tube, and the like. The number of the collection containers 15c is not particularly limited in the present technology. Note that the collection container 15c may be replaceably installed in a container for the collection container (not illustrated). Specifically, the collection containers 15c are arranged on a Z-axis stage (not illustrated) configured to be movable in a direction orthogonal to the discharge direction of the droplet D from the orifice portion C2 and the opposing direction of the deflection plates 15b.

### (7) Imaging Unit 20

The particle sorting system 100 according to the present embodiment may include an imaging unit 20. At the BOP, the imaging unit 20 acquires images of the liquid before being converted into the droplet and the droplet D. Examples of the imaging unit 20 include a droplet camera such as a CCD camera or a CMOS sensor. The droplet camera 201 can be arranged at a position between the orifice portion C2 and the deflection plates 15b where the droplet D can be imaged. Furthermore, the droplet camera 201 can adjust the focus of the captured image of the droplet D. Examples of a light source 202 that illuminates an imaging region in the droplet camera 201 include a strobe and the like. Note that the imaging unit 20 can also obtain a photograph of a phase at a certain time, and can continuously obtain the photograph within a certain cycle. Note that the term "constant cycle" as used herein is not particularly limited, and may be one cycle or a plurality of cycles. Furthermore, in the case of a plurality of cycles, each cycle may be temporally continuous or discontinuous.

The image captured by the imaging unit 20 is displayed on the display unit 18 to be described later, and can be used by the user to confirm the formation status of the droplet D (for example, the size, shape, interval, and the like of the droplet D). Furthermore, the strobe may be controlled by a break-off control unit to be described later, the control unit 12 described above, and the like. The strobe includes, for example, an LED for imaging the droplet D and a laser (for example, a red laser light source or the like) for imaging the particles, and can be switched according to the purpose of imaging or the like by a break-off control unit to be described later. The specific structure of the strobe is not particularly limited, and for example, conventionally known circuits and/or elements can be used.

### (8) Break-Off Control Unit

Although not illustrated, the particle sorting system 100 according to the present embodiment may include a break-off control unit. The break-off control unit controls the break-off of the droplet D containing the particles on the basis of the image acquired by the imaging unit 20 described above that shows the state of the droplet D containing the target particle. The control can be performed by the control unit 12 described above. Specifically, the drive voltage of the vibrating element is adjusted on the basis of the timing at which the droplet D containing the particles breaks off, which is specified by a plurality of droplet observation images captured by the imaging unit 20, so that a bonding state between the droplet D and the liquid column and/or a distance between the droplet D and the liquid column, and a break-off position of the droplet D are controlled to be kept constant. With this arrangement, by constantly applying feedback to the drive voltage to adjust the droplet D, it is possible to prevent the droplet D from being destabilized after the start of sorting.

### (9) Storage Unit 17

The particle sorting system 100 according to the present embodiment may include a storage unit 17. The storage unit 17 stores, for example, all items such as the optical data detected by the detection unit 14, the feature amount of each particle calculated by the control unit 12, the generated sorting control signal, and the sorting condition input by the user interface 19. The storage unit 17 may be included in the housing in which the detection unit 14 and the like are provided, or may be outside the housing. The storage unit 17 is not essential in the particle sorting system 100 according to the present embodiment, and an external storage device (for example, a hard disk or the like) or the like may be used. Furthermore, a form may be adopted in which the housing provided with the detection unit 14 and the like is connected to a network, either wirelessly or by wire, such that data stored in the housing is stored on a server or a cloud. Furthermore, the storage unit 17 may be coupled to each unit of the particle sorting system 100 via a network in a wireless or wired manner.

### (10) Display Unit 18

The particle sorting system 100 according to the present embodiment may include a display unit 18. The display unit 18 can display all items, and for example, can display the feature amount of each particle calculated by the control unit 12 as a histogram or the like. Furthermore, an image or the like captured by the imaging unit 20 may be displayed. The display unit 18 is not essential in the particle sorting system 100 according to the present embodiment, and an external display device (for example, a display, a monitor, a printer, a personal digital assistant, and the like) or the like may be used. Furthermore, the display unit 18 may be coupled to each unit of the particle sorting system 100 via a network in a wireless or wired manner.

Note that as the display unit 18, for example, a smart speaker, an earphone, a headphone, VR or AR goggles, smart glasses, a projector, or the like may be used, and these may be used in combination with the above-described external display device or the display unit 18 in the housing.

### (11) User Interface 19

The particle sorting system 100 according to the present embodiment may have a user interface 19. The user interface 19 is a part to be operated by the user. The user can input various data via the user interface 19, access each part of the particle sorting system 100, and control each part. Specifically, a region of interest can be set on the histogram or the like displayed on the display unit 18 via the user interface 19, and the sorting condition or the like can be determined. The user interface 19 is not essential in the particle sorting system 100 according to the present embodiment, and an external operating device (for example, a mouse, a keyboard, a button, a touch panel, a personal digital assistant, or the like) or the like may be used. Furthermore, the user interface 19 may be coupled to each part of the particle sorting system 100 via a network in a wired or wireless manner.

Note that as the user interface 19, for example, a smart speaker, VR or AR goggles, smart glasses, or the like may also be used, and may be used in combination with the above-described external operating device or the user interface 19 in the housing.

### (12) Others

Note that the functions performed in each part of the particle sorting system 100 according to the present embodiment can be stored as a program in a hardware resource including a general-purpose computer, a control unit including a CPU and the like, a recording medium (for example, a non-volatile memory (for example, a USB memory or the like), an HDD, a CD, or the like), and the like, and made to function. Furthermore, the function may be realized by a server or a cloud coupled via a network.

### 2. Second Embodiment (Orifice Component C)

Figs. 15 to 17 are six-sided views illustrating an example of a second embodiment of the orifice component C according to the present technology, and Figs. 18 and 19 are perspective views illustrating the example of the second embodiment of the orifice component C according to the present technology. Furthermore, Fig. 20 is a cross-sectional view taken along line P-P in A of Fig. 15. The orifice component C according to the present embodiment has a base member C1 and an orifice portion C2 through which the liquid containing the particles flows, and may have other parts and the like as necessary.

Fig. 21 is a partially enlarged view for describing a state in which the orifice component C is attached or detached from the plate E. Note that as illustrated in Fig. 21, the orifice component C according to the present embodiment can be detached from the plate E, and the orifice component C alone can be disposable. With this arrangement, in the cell sorter, there is a demand for changing the shape of the orifice according to the size of the particle, or replacing the orifice according to clogging or the like, so that it is possible to meet these demands. Further, this leads to prevention of contamination and improvement of usability. In addition, since only the downsized orifice component C needs to be disposable, it is possible to contribute to reduction in manufacturing cost.

Each part will be described below.

### (1) Base Member C1

The orifice portion C2 is formed at one end of the base member C1, and as illustrated in Figs. 15 to 17, the orifice portion C2 is formed so as to extend in a substantially vertical direction relative to the base member C1, with the base member C1 being substantially in a horizontal direction.

The base member C1 and the orifice portion C2 may be formed as separate members and then integrated, or may be integrally molded. However, in the present embodiment, in order to improve manufacturing efficiency, it is preferable that the base member C1 and the orifice portion C2 are integrally molded. In the case of integral molding, the base member C1 and the orifice portion C2 are preferably formed using resin. Note that in the case of forming the base member C1 and the orifice portion C2 as separate members, for example, at least the top surface of the orifice portion C2 may be formed using a material having a high Young's modulus such as ceramic, and the other may be formed using the resin.

As the resin, for example, general-purpose plastics such as polyethylene (PE), polypropylene (PP), polystyrene (PS), polyvinyl chloride (PVC), ABS resin, and polymethyl methacrylate resin (PMMA); engineering plastics such as polycarbonate (PC), polyacetal (POM), and modified polyphenylene ether (PPE); and optical plastics such as cycloolefin polymer (COP) and cyclic olefin copolymer (COC) are preferable. By using these resins, moldability of a water stop mechanism C4 to be described later is improved, and the water stop mechanism C4 can be crushed at a desired pressure (for example, 10 to 30 N or the like). Furthermore, various powders of carbon and metal, various fibers, and the like may be added to these resins.

Furthermore, even in the orifice component C in which the water stop mechanism C4 to be described later is formed, by integrally molding the orifice portion C2 with a resin that is crushed by a desired pressure, that is, plastically deformed by a pushing force when the orifice portion C2 is attached, the water-stopping shape is damaged by one use, and the orifice component C can be distributed as a disposable product. The "water stop mechanism C4" and the "water-stopping shape" will be described in "(4) Water Stop Mechanism C4" described later.

### (2) Orifice Portion C2

As illustrated in Fig. 20, the orifice portion C2 has an orifice flow path C21 formed therein. Then, the liquid is discharged to the outside through the orifice flow path C21. The shape and the like of the orifice portion C2 are not particularly limited as long as the orifice flow path C21 is formed therein and is formed so as to extend in the substantially vertical direction of the base member C1. However, as described above, it is preferable that the orifice portion C2 partially has the tapered shape C22. Specifically, as illustrated in Fig. 20 and the like, the tapered shape C22 is preferably continuously formed in a substantially annular shape so as to surround a coupling portion (in Fig. 20 and the like, the connection surface) with the cuvette flow path P through which the liquid containing particles flows.

Furthermore, as described above, the orifice portion C2 is preferably movable in any one or more directions of a group including a substantially parallel direction, a substantially vertical direction, and a substantially rotational direction with respect to the discharge axis. With this arrangement, even if a slight positional deviation occurs at the time of fitting with the nozzle outlet P131, the positional deviation can be covered by the movement of the orifice portion C2, and the tapered shape C22 is also combined, so that smooth positioning (fitting) can be performed without damaging each component.

### (3) Water Stop Mechanism C4

The orifice component C according to the present embodiment may further include a water stop mechanism C4 that prevents leakage of the liquid from the coupling portion between the cuvette flow path P through which the liquid containing the particles flows and the orifice portion C2.

Conventionally, if an O-ring does not fit to an orifice fitting portion as intended at the time of orifice replacement, the water stop function cannot be maintained, and liquid leakage occurs inside the device. Therefore, when replacing or attaching an orifice, the user had to use a microscope or the like every time to confirm for damage or a foreign substance caught in the O-ring, which can be as small as about 1 mm in diameter in some cases. Then, if a foreign substance was found, the O-ring had to be taken out with tweezers without damaging it, subjected to ultrasonic cleaning or the like, and then re-attached while confirming again with a microscope or the like. Furthermore, depending on the size of the particles, the orifice had to be attached and detached.

However, due to the configuration of the device, the liquid containing particles flows from the cuvette flow path in the direction of gravity, and thus the water stop mechanism is always required between the cuvette flow path and the orifice. Therefore, the use of the O-ring was essential in the conventional technology. Despite this, there were cases where the O-ring would disengage or remain in the cuvette even during use, and usability was poor in many cases in the conventional technology. On the other hand, there is also a type in which the orifice and the O-ring are bonded with a resin or the like as a technology, but when cleaning is repeated, the bonding function is deteriorated, and the orifice and the O-ring are eventually detached. From the above, there has been an actual situation that the orifice replacement work is a process that requires significant effort from the user.

On the other hand, by using the water stop mechanism C4 in the present embodiment, it is possible to provide an orifice structure capable of forming a stable droplet for a long time without liquid leakage from the coupling portion even under a predetermined condition such as a constant pressure. Then, it is possible to reduce the effort required for the user to perform the work for orifice replacement.

The water stop mechanism C4 is preferably formed in a part of the orifice portion C2. The water stop mechanism C4 formed in a part of the orifice portion C2 may be an O-ring as long as it can perform a water stop function. In this case, the O-ring is preferably fixed to a part of the orifice portion C2 in advance. With this arrangement, it is possible to save the user's effort of attaching the O-ring. Furthermore, as described later, the water stop mechanism C4 may have an integrally molded "water-stopping shape". The water-stopping shape will be described later.

The water stop mechanism C4 is preferably formed on a connection surface of the orifice portion C2 with the cuvette flow path P. Specifically, it is preferably formed on the top surface of the orifice portion C2. With this arrangement, the orifice portion C2 and the cuvette flow path P can be press-fitted by the pressure due to the rise of the holding portion 11, and it is not necessary for the user himself/herself to perform the work, and complication of the work can be avoided.

The water stop mechanism C4 is preferably formed on the connection surface and is based on a shape integrally molded with the orifice portion C2. Specifically, an integrally molded water-stopping shape can be used. With this arrangement, the following advantages are expected.

The user does not need to confirm the coupling status between the orifice portion C2 and the O-ring with a microscope or the like every time. Furthermore, the effort involved in the work of cleaning the O-ring (removing with tweezers, cleaning, and re-attaching) is eliminated. Furthermore, by making the orifice portion C2 with a water-stopping shape disposable, it is possible to replace the orifice without worrying about damage, a foreign substance, or adhesion between the orifice and the O-ring.

Therefore, it is possible to provide an orifice replacement mechanism in which a user's working process related to the orifice replacement is significantly shortened and improved (improved ease of use).

Fig. 28 is a view for describing a water-stopping shape. A of Fig. 28 is a perspective view illustrating an example of an embodiment of the orifice portion C2, B of Fig. 28 is a perspective cross-sectional view of A of Fig. 28, and C of Fig. 28 is a horizontal cross-sectional view of A of Fig. 28. As described above, the orifice portion C2 has a water-stopping shape on the connection surface with the cuvette, and the orifice portion C2 has a fine water-stopping shape to the extent of being deformed when the orifice portion C2 is press-fitted onto the cuvette flow path P, so that the O-ring is not required for the water stop of the orifice, eliminating the disadvantages of using O-ring. The disadvantages of using the O-ring include that the O-ring is detached and left due to attachment and detachment of the orifice, which leads to malfunction of the device, that the O-ring bends in the cuvette, which causes deterioration of the droplet performance, that the small O-ring (for example, those having a diameter of about 1 mm, and the like) has poor assemblability, resulting in the increased component cost.

As illustrated in Fig. 28, the water-stopping shape may be a substantially annular convex shape, and may be a substantially elliptical annular convex shape, a polygonal annular convex shape such as a triangular shape and a square shape. Furthermore, the shape is not necessarily continuous, and may be partially discontinuous or entirely discontinuous (for example, a set of convex portions arranged in a substantially annular shape, and the like). In the present embodiment, as illustrated in Fig. 28, it is preferable that the water-stopping shape has a substantially annular convex shape.

A of Fig. 29 is a partially enlarged view of the water-stopping shape in a case where the water-stopping shape is a substantially annular convex shape, and B of Fig. 29 is a partially enlarged view of A of Fig. 29. In A of Fig. 29, L1 is a seal diameter which is a center diameter of a circumference crushed by water stop, and is determined according to a diameter of the orifice portion C2. Specifically, in a case where the diameter of the orifice portion C2 is 2.79 mm, the seal diameter is preferably 0.7 to 2.0 mm, and an outer diameter ratio is preferably about 0.2 to 0.7, but the present technology is not limited thereto.

In B of Fig. 29, L3 is a seal portion base width, which is a width of a base of the seal portion, and the larger the width, the smaller the gap when crushed, improving the droplet performance. On the other hand, the smaller the width, the easier it is crushed, and thus the water-stopping robustness is improved. The seal portion base width is determined according to the seal diameter L1. Specifically, in a case where the seal diameter is 0.8 mm, the seal diameter ratio is preferably 0.01 to 0.5 and more preferably 0.05 to 0.1, but the present technology is not limited thereto.

In A of Fig. 29, L2 is a trapezoidal portion diameter which is a diameter of a surface desired to approach the cuvette flow path P, and as the trapezoidal portion diameter increases and approaches the water stop portion, the gap when crushed decreases and the droplet performance is improved. The trapezoidal portion diameter is determined according to the seal diameter L1. Specifically, in a case where the seal diameter is 0.8 mm, the seal diameter ratio is preferably 0.5 to 0.15 and more preferably 0.75 to 0.95, but the present technology is not limited thereto.

Fig. 30 is a view for describing a gap between the orifice portion C2 and the cuvette flow path P. The inventors of the present application have found that a deformed shape for stopping water may be additionally provided on the connection surface to secure the droplet performance. Specifically, the gap between the orifice portion C2 and the cuvette flow path P was reduced. More specifically, in the water stop by deformation of a general tapered portion, the gap is on the order of several millimeters, but this is designed to be a gap on the order of several microns. Note that it has been confirmed that the gap between the orifice portion C2 and the cuvette flow path P affects the droplet performance.

Fig. 31 is a view for describing a taper angle difference between the cuvette flow path P and the orifice portion C2. The taper angle difference is a taper difference between the cuvette flow path P into which the orifice portion C2 is inserted and the orifice portion C2. Due to this difference, the tapered portion of the orifice portion C2 is crushed to stop water. Therefore, it is preferable that the taper angle difference is within a predetermined range. Specifically, the taper angle difference is preferably 3 to 12 degs and more preferably 6 to 9 degs, but the present technology is not limited thereto.

### (4) Closed Orifice Portion C3

The closed orifice portion C3 is similar to that described in "(3-2) Replacement of Plate E Including Orifice Portion C2" and "(3-3) Cleaning Using Plate E Including Closed Orifice Portion C3" in "1. First Embodiment (Particle Sorting System 100)". That is, it is used to clean the inside of the cuvette flow path P. Furthermore, the control example by the control unit 12 using the closed orifice portion C3 is similar to that described in "[Control Example 2]" of "(3-5) Control Example by Control Unit 12" of "1. First Embodiment (Particle Sorting System 100)", and thus the description thereof is omitted here.

Fig. 32 is a view for describing a stop valve structure C6 in the closed orifice portion C3. In the "[Control Example 2]" described above, since the cleaning liquid, the pure water, and the like flow from the cuvette flow path P side, in order to prevent these liquids from entering unintended places, it is preferable that the closed orifice portion C3 has the stop valve structure C6 in a part thereof. Specifically, for example, as illustrated in A of Fig. 32 and B of Fig. 32, the O-ring may be arranged at the base of the closed orifice portion C3 as the stop valve structure C6. Furthermore, centering may be performed in a reaction force direction of the O-ring with the base shape of the closed orifice portion C3.

Furthermore, as illustrated in B of Fig. 32, two stop valve structures C6 may be provided. On the other hand, as illustrated in C of Fig. 32, if the O-ring is formed too large, the O-ring hits the bottom surface of the cuvette flow path P, and the centering cannot be expected. Therefore, it is preferable to set the diameter of the O-ring to such an extent that the O-ring does not hit the bottom surface of the cuvette flow path P. Specifically, it is preferable to use the stop valve structure C6 having the structure illustrated in A and B of Fig. 32.

A of Fig. 40 is a perspective view illustrating the embodiment of the closed orifice portion C3 in Fig. 32, and B of Fig. 40 is a perspective view illustrating a modification example of the embodiment of the closed orifice portion C3 different from that in Fig. 32. Note that in A and B of Fig. 40, the stop valve structure C6 is omitted.

In A of Fig. 40, the top surface is flat, whereas in the closed orifice portion C3 illustrated in B of Fig. 40, it has two concave shapes C32 on the top surface. As described above, by shifting the position and shape from line symmetry on the top surface of the closed orifice portion C3, the water flow colliding with the top surface of the closed orifice portion C3 is divided in the upward direction and the horizontal direction to eliminate the circulation region, and the flow in the circumferential direction is generated, so that improvement of the cleaning effect is expected. Note that in the embodiment illustrated in B of Fig. 40, the top surface of the closed orifice portion C3 has the two concave shapes C32, but the present technology is not limited thereto, and may have, for example, a plurality of concave or convex shapes, an S-shaped groove, or the like.

Furthermore, in the embodiment illustrated in B of Fig. 40, the closed orifice portion C3 has four drain holes C33, whereas the closed orifice portion C3 illustrated in A of Fig. 40 has two drain holes C33. With this arrangement, it is possible to further promote drainage as compared with the case of having the two drain holes C33.

### (5) Positioning Mechanism C23

Figs. 33 to 35 are six-sided views illustrating a modification example of the second embodiment of the orifice component C according to the present technology, and Figs. 36 and 37 are perspective views illustrating the modification example of the second embodiment of the orifice component C according to the present technology. Furthermore, Fig. 38 is a cross-sectional view taken along line Q-Q in A of Fig. 33. The outer wall of the orifice portion C2 of the orifice component C according to the present technology may include a positioning mechanism C23 for positioning the orifice flow path C21 with respect to the cuvette flow path P of the particle sorting system 100.

If the orifice flow path C21 is inclined with respect to the cuvette flow path P of the particle sorting system 100, there is a concern that the particle sorting accuracy may decrease. Therefore, it is desirable that the cuvette flow path P of the particle sorting system 100 and the orifice flow path C21 are positioned coaxially. In the present technology, by providing the positioning mechanism C23 on the outer wall of the orifice portion C2, the inclination of the orifice flow path C21 with respect to the cuvette flow path P of the particle sorting system 100 can be prevented, and the particle sorting accuracy can be further improved.

The form of the positioning mechanism C23 is not particularly limited, and any form can be adopted as long as the cuvette flow path P of the particle sorting system 100 and the orifice flow path C21 can be coaxially positioned. For example, as in the modification example of the second embodiment illustrated in Figs. 33 to 37, a convex rib structure substantially parallel to the orifice flow path C21 is provided on the outer wall of the orifice portion C2, and for example, although not illustrated, a concave rib structure is provided on the inner wall of a concave portion (see Figs. 3 and 4 and the like) formed in the nozzle outlet P131 of the particle sorting system 100, and these rib structures are fitted, whereby the cuvette flow path P of the particle sorting system 100 and the orifice flow path C21 can be coaxially positioned. Note that although not illustrated, the rib structure provided on the outer wall of the orifice portion C2 may be formed in a concave shape, and a convex rib structure may be provided on the inner wall of the concave portion formed in the nozzle outlet P131 of the particle sorting system 100 to be fitted.

Note that in the modification example of the second embodiment illustrated in Figs. 33 to 37, the positioning mechanism C23 having the four rib structures on the outer wall of the orifice portion C2 is exemplified, but the number thereof is not limited, and the positioning mechanism C23 having one or more rib structures can be adopted. From the viewpoint of prevention of inclination, the number is preferably two or more, and more preferably three or more. Furthermore, from the viewpoint of simplicity at the time of manufacturing the orifice component C, the number is preferably eight or less, more preferably seven or less, and still more preferably six or less.

In a case where the above-described orifice portion C2 has the tapered shape C22, the positioning mechanism C23 is preferably provided closer to the base member C1 than the tapered shape C22. That is, it is preferable that the positioning mechanism C23 is not provided in the portion of the tapered shape C22. With such a configuration, the tapered shape C22 exerts smooth pull-in into the concave portion formed in the nozzle outlet P131, and after being pulled in, the positioning mechanism C23 can accurately position the cuvette flow path P of the particle sorting system 100 and the orifice flow path C21 coaxially.

Note that in the modification example of the second embodiment illustrated in Figs. 33 to 37, the positioning mechanism C23 having a rib structure continuous from the bottom of the tapered shape C22 to the base member C1 on the outer wall of the orifice portion C2 is illustrated. However, the positioning mechanism C23 does not necessarily have a continuous shape and the shape may be partially discontinuous. Furthermore, the positioning mechanism C23 does not need to extend from the bottom of the tapered shape C22 to the base member C1, and may be interrupted from the base member C1 to, for example, a height of 1/3 or a height of 1/2 although not illustrated.

### (6) Inclination Control Mechanism C24

An inclination control mechanism C24 can be provided on the top surface of the orifice portion C2 of the orifice component C according to the present technology (the coupling surface on the nozzle outlet P131 side of the particle sorting system 100). After the orifice component C is installed in the particle sorting system 100, the above-described water stop mechanism C4 can prevent leakage of the liquid from the coupling portion between the cuvette flow path P and the orifice portion C2. However, if the orifice component C itself is inclined, the above-described leakage prevention of the liquid by the water stop mechanism C4 may not function. Therefore, in the present technology, by providing the inclination control mechanism C24 on the top surface of the orifice portion C2 (the coupling surface on the nozzle outlet P131 side of the particle sorting system 100), it is possible to more reliably prevent leakage of the liquid from the coupling portion between the cuvette flow path P and the orifice portion C2.

The form of the inclination control mechanism C24 is not particularly limited, and any form can be adopted as long as the inclination after the orifice component C is installed in the particle sorting system 100 can be controlled. For example, as in the modification example of the second embodiment illustrated in Figs. 33 to 38, the top surface of the orifice portion C2 (the coupling surface on the nozzle outlet P131 side of the particle sorting system 100) can have a substantially annular convex shape in contact with the inner bottom surface of the concave portion formed at the nozzle outlet P131 of the particle sorting system 100. In addition, a substantially elliptical annular convex shape, or a polygonal annular convex shape such as a triangle or a square may be used. Furthermore, the shape is not necessarily continuous, and may be partially discontinuous or entirely discontinuous (for example, a set of convex portions arranged in a substantially annular shape, and the like).

### 3. Third Embodiment (Plate E)

Fig. 21 is a partially enlarged view for describing a state in which the orifice component C is attached to or detached from the plate E as described above, and Fig. 22 is a partially enlarged view for describing a state in which the plate E is fitted to the orifice component C. Furthermore, Fig. 23 is a perspective view for describing an example of an embodiment of the plate E and the orifice component C, and Fig. 24 is a view for describing a state at the time of replacement of the orifice component C. The plate E according to the present embodiment can be fitted to the orifice component C described above, and may have other parts and the like as necessary.

Each part will be described below.

As described above, the orifice component C is attachable to and detachable from the plate E as illustrated in Fig. 21 and 22, and the orifice component C once fitted can be disposable, while the plate E according to the present embodiment can be repeatedly used.

Fig. 24 is a view for describing a state at the time of replacement of the orifice component C. As described above, since the orifice component C alone can be disposable, supply and distribution in units of the orifice component C are possible. Furthermore, as illustrated in B of Fig. 24, the two-stage lifting/lowering positioning described above can be performed by providing a pull-in play for the two-stage lifting/lowering at the orifice portion C2 after replacement. With this arrangement, the orifice component C can be downsized.

Note that in the present technology, not only the orifice component C alone but also the plate E alone or the orifice component C and the plate E in a state of being fitted may be distributed.

Examples of the material for forming the plate E include resin. Examples of the resin include cyclic olefin, polycarbonate, polymethyl methacrylate resin (PMMA), polyethylene, polystyrene, polypropylene, and polydimethylsiloxane (PDMS), but the present technology is not limited thereto. Furthermore, various powders of carbon and metal, various fibers, and the like may be added to these resins.

When the orifice component C is fitted to the plate E, it is preferable to insert the orifice component C toward the longitudinal direction of the plate E (longitudinal direction of the main body E3 of the plate E: see Fig. 23) to fit the orifice component C. With this arrangement, the user can easily fit the orifice component C, and usability is improved.

As a method of fitting the orifice component C and the plate E, for example, the orifice component C can be fitted by a pressing portion E1 that presses the orifice component C toward the plate E side and a fixing portion E2 that fixes the orifice component C. Specifically, first, the orifice component C is inserted between the pressing portion E1 and the plate E (see Fig. 21). Next, after the insertion, the fixing portion E2 fixes the plate E and the orifice component C inserted between the pressing portion E1 and the plate E by the fixing portion E2.

Examples of the material forming the pressing portion E1 and the fixing portion E2 include a stainless alloy, a titanium alloy, and metal glass, but the present technology is not limited thereto. Fig. 25 is a view for describing the orifice component C and the plate E in detail. In the embodiment illustrated in Fig. 25, the pressing portion E1 that presses the disposable orifice component C includes, for example, a stainless alloy cut by wire or the like, and the main body E3 includes the resin described above. Note that the fixing portion E2 has a structure in which a user can disassemble the fixing portion E2 for cleaning when stubborn salting-out or the like is deposited. On the other hand, a small amount of salting-out or the like can be handled by ultrasonic cleaning without disassembly.

B of Fig. 25 is a view of the fitting portion between the orifice component C and the plate E as viewed from the back surface. a of B of Fig. 25 is a first contact surface where the orifice component C and the plate E are in contact with each other. Furthermore, b of B of Fig. 25 illustrates a shape in which the orifice component C is snap-fitted to the plate E. Further, in c of B of Fig. 25, the play amount required for the orifice portion C2 is set in the gap of the outer shape. In addition, d in B of Fig. 25 is a second contact surface where the orifice component C and the plate E are in contact with each other. The moment can be absorbed by the deflection of the plate E.

e of B of Fig. 25 is a part that functions as a latch. Furthermore, f of B of Fig. 25 is a part where the fixing portion E2 including a stainless alloy or the like is viewed from the back surface, and examples thereof include an E-type retaining ring (E-ring), but the present technology is not limited thereto. Note that the E-type retaining ring is a ring-shaped retaining ring in which a circumferential groove is cut on the discharge axis, and is inserted from the radial direction (a direction of 90 degrees with respect to the discharge axis) to retain the holding component.

In the embodiment illustrated in Figs. 21 to 25 described above, the plate E and the orifice component C are fitted via the pressing portion E1 and the fixing portion E2, but the method of fitting the plate E and the orifice component C is not limited thereto. For example, as in the modification example illustrated in Fig. 39, the orifice component C may be directly fitted to the main body E3 of the plate E. By adopting a structure in which the orifice component C is directly fitted to the main body E3 of the plate E, the number of components can be reduced, which contributes to cost reduction in addition to simplification at the time of manufacturing the orifice component C.

Note that the present technology can also adopt the following configurations.
[1] A particle sorting system including:
   a cuvette flow path through which a liquid containing particles flows;
   a holding portion that holds a plate including an orifice portion through which the liquid is discharged; and
   a control unit that controls to change a position of the holding portion to be substantially parallel to a discharge axis, in which
   the cuvette flow path and the plate can be positioned based on shapes of the cuvette flow path and the plate.
[2] The particle sorting system according to [1], in which the orifice portion is attachable to and detachable from the plate.
[3] The particle sorting system according to [1] or [2], in which the orifice portion is disposable.
[4] The particle sorting system according to any one of [1] to [3], in which the orifice portion partially has a tapered portion.
[5] The particle sorting system according to any one of [1] to [4], in which the orifice portion is movable in any one or more directions of a group including a substantially parallel direction, a substantially vertical direction, and a substantially rotational direction with respect to the discharge axis.
[6] The particle sorting system according to any one of [1] to [5], in which the orifice portion further includes a water stop mechanism that prevents leakage of the liquid from a coupling portion between the cuvette flow path through which the liquid containing the particles flows and the orifice portion.
[7] The particle sorting system according to [6], in which the water stop mechanism is formed in a part of the orifice portion.
[8] The particle sorting system according to [7], in which the water stop mechanism is formed in a connection surface of the orifice portion with the cuvette.
[9] The particle sorting system according to [8], in which the water stop mechanism is formed on the connection surface and is based on a shape integrally molded with the orifice portion.
[10] The particle sorting system according to any one of [1] to [9], in which the control unit controls positioning of the cuvette flow path and the plate in multiple stages.
[11] The particle sorting system according to any one of [1] to [10], in which the positioning is based on engagement between a positioning pin provided on the cuvette flow path side and an engagement portion of the plate.
[12] The particle sorting system according to [11], in which the positioning is based on fitting of a lower end of the cuvette flow path and an upper end of the orifice portion.
[13] The particle sorting system according to [12], in which the fitting is based on an uneven shape.
[14] The particle sorting system according to any one of [1] to [13], in which the plate including the orifice portion is replaceable with a plate including a closed orifice portion that performs cleaning inside of the cuvette flow path.
[15] The particle sorting system according to any one of [1] to [14], in which the control unit receives a signal from a plate presence/absence sensor and discriminates presence/absence of the plate.
[16] The particle sorting system according to any one of [1] to [15], in which the control unit receives a signal from a cleaning nozzle sensor, discriminates whether or not it is a cleaning nozzle, and in a case where it is discriminated to be the cleaning nozzle, controls to perform cleaning inside of the cuvette flow path.
[17] The particle sorting system according to [16], in which the discrimination is performed on the basis of a part of a shape of the plate.
[18] The particle sorting system according to [12], in which the control unit controls the orifice portion to be sucked to the cuvette flow path side in accordance with rising of the holding portion.
[19] The particle sorting system according to [14], in which in a case where it is discriminated that the holding portion has reached a lower end, the control unit performs control so that the plate including the orifice portion or the plate including the closed orifice portion becomes a detachable state.
[20] The particle sorting system according to [14], in which the control unit changes a pressure of the holding portion in a rising direction on the discharge axis when the orifice portion or the closed orifice portion abuts on the cuvette flow path.
[21] An orifice component including:
   a base member; and
   an orifice portion through which a liquid containing particles flows, in which
   the orifice portion is formed at one end of the base member and extends in a substantially vertical direction relative to the base member.
[22] The orifice component according to [21], which is disposable.
[23] The orifice component according to [21] or [22], in which the orifice portion partially has a tapered shape.
[24] The orifice component according to any one of [21] to [23], in which the orifice portion is movable in any one or more directions of a group including a substantially parallel direction, a substantially vertical direction, and a substantially rotational direction with respect to the discharge axis.
[25] The orifice component according to any one of [21] to [24], in which the base member and the orifice portion are integrally molded.
[26] The orifice component according to any one of [21] to [25], further including a water stop mechanism that prevents leakage of the liquid containing particles from a coupling portion between the cuvette flow path through which the liquid flows and the orifice portion.
[27] The orifice component according to [26], in which the water stop mechanism is formed in a part of the orifice portion.
[28] The orifice component according to [27], in which the water stop mechanism is formed on a connection surface of the orifice portion with the cuvette flow path.
[29] The orifice component according to [28], in which the water stop mechanism is formed on the connection surface and is based on a shape integrally molded with the orifice portion.
[30] A plate including: a base member; and an orifice portion through which a liquid containing particles flows, in which the orifice portion is formed at one end of the base member and is fittable with an orifice component extending in a substantially vertical direction relative to the base member.
[31] The plate according to [30], in which the orifice component is fitted by being inserted in a longitudinal direction of the plate.
[32] The plate according to [31], further including: a pressing portion that presses the orifice component toward the plate side; and a fixing portion that fixes the orifice component.
[33] The plate according to [32], in which the orifice component is inserted between the pressing portion and the plate.
[34] The plate according to [33], in which the orifice component and the plate are fixed by the fixing portion after the insertion.

### REFERENCE SIGNS LIST

- 100: Particle sorting system
- 11: Holding portion
- 12: Control unit
- 13: Irradiation unit
- 14: Detection unit
- 15: Sorting control unit
- 15a: Charging unit
- 15b: Deflection plate
- 15c: Collection container
- 16: Sensor
- 17: Storage unit
- 18: Display unit
- 19: User interface
- 20: Imaging unit
- 201: Droplet camera
- 202: Light source
- 1000: Objective lens
- P: Cuvette flow path
- P11: Sample liquid injection port
- P12a, P12b: Sheath liquid injection port
- P13: Main flow path
- P131: Nozzle outlet
- P4: Cuvette holder
- P41: Positioning pin
- D: Droplet
- BOP: Break-off point
- C: Orifice component
- C1: Base member
- C2: Orifice portion
- C22: Tapered shape
- C23: Positioning mechanism
- C24: Inclination control mechanism
- C3: Closed orifice portion
- C31: Closed nozzle
- C32: Concave shape
- C33: Drain hole
- C4: Water stop mechanism
- C6: Stop valve structure
- E: Plate
- E1: Pressing portion
- E2: Fixing portion
- E3: (Plate) main body
- E4: Engagement portion
- E5: Cutout portion
- S: Stage

## Claims

1. A particle sorting system comprising:
a cuvette flow path through which a liquid containing particles flows;
a holding portion that holds a plate including an orifice portion through which the liquid is discharged; and
a control unit that controls to change a position of the holding portion to be substantially parallel to a discharge axis, wherein
the cuvette flow path and the plate can be positioned based on shapes of the cuvette flow path and the plate.

2. The particle sorting system according to claim 1, wherein the orifice portion is attachable to and detachable from the plate.

3. The particle sorting system according to claim 1, wherein the orifice portion is disposable.

4. The particle sorting system according to claim 1, wherein the orifice portion partially has a tapered portion.

5. The particle sorting system according to claim 1, wherein the orifice portion is movable in any one or more directions of a group including a substantially parallel direction, a substantially vertical direction, and a substantially rotational direction with respect to the discharge axis.

6. The particle sorting system according to claim 1, wherein the orifice portion further includes a water stop mechanism that prevents leakage of the liquid from a coupling portion between the cuvette flow path through which the liquid containing the particles flows and the orifice portion.

7. The particle sorting system according to claim 6, wherein the water stop mechanism is formed in a part of the orifice portion.

8. The particle sorting system according to claim 1, wherein the control unit controls positioning of the cuvette flow path and the plate in multiple stages.

9. The particle sorting system according to claim 1, wherein the positioning is based on engagement between a positioning pin provided on the cuvette flow path side and an engagement portion of the plate.

10. The particle sorting system according to claim 1, wherein the positioning is based on fitting of a lower end of the cuvette flow path and an upper end of the orifice portion.

11. The particle sorting system according to claim 10, wherein the fitting is based on an uneven shape.

12. The particle sorting system according to claim 1, wherein the plate including the orifice portion is replaceable with a plate including a closed orifice portion that performs cleaning inside of the cuvette flow path.

13. The particle sorting system according to claim 1, wherein the control unit receives a signal from a plate presence/absence sensor and discriminates presence/absence of the plate.

14. The particle sorting system according to claim 1, wherein the control unit receives a signal from a cleaning nozzle sensor, discriminates whether or not it is a cleaning nozzle, and in a case where it is discriminated to be the cleaning nozzle, controls to perform cleaning inside of the cuvette flow path.

15. The particle sorting system according to claim 14, wherein the discrimination is performed on a basis of a part of a shape of the plate.

16. The particle sorting system according to claim 1, wherein the control unit controls the orifice portion to be sucked to the cuvette flow path side in accordance with rising of the holding portion.

17. The particle sorting system according to claim 12, wherein in a case where it is discriminated that the holding portion has reached a lower end, the control unit performs control so that the plate including the orifice portion or the plate including the closed orifice portion becomes a detachable state.

18. The particle sorting system according to claim 12, wherein the control unit changes a pressure of the holding portion in a rising direction on the discharge axis when the orifice portion or the closed orifice portion abuts on the cuvette flow path.

19. An orifice component comprising:
a base member; and
an orifice portion through which a liquid containing particles flows, wherein
the orifice portion is formed at one end of the base member and extends in a substantially vertical direction relative to the base member.

20. A plate comprising: a base member; and an orifice portion through which a liquid containing particles flows, wherein the orifice portion is formed at one end of the base member and is fittable with an orifice component extending in a substantially vertical direction relative to the base member.
